# EUROPEAN PATENT APPLICATION

(11) **EP 1 343 117 A1**
(43) Date of publication of application: **10.09.2003**
(21) Application number: 01970305.7
(22) Date of filing: 28.09.2001
(51) Int. Cl.: G06T 13/00

(54) **DEVICE, SYSTEM, METHOD, AND PROGRAM FOR REPRODUCING OR TRANSFERRING ANIMATION**

(30) Priority: 02.10.2000 JP 2000302958; 05.02.2001 JP 2001028850
(71) Applicant: SHARP KABUSHIKI KAISHA, Osaka 545-8522 (JP)
(72) Inventor: MINAKUCHI, Mitsuru, Soraku-gun, Kyoto 619-0241 (JP)
(74) Representative: Müller - Hoffmann & Partner
(86) International application number: JP0108606
(87) International publication number: WO02029727

(57) **Abstract**

When an action tag included in an animation description script of a second character is described to synchronize with an action tag included in an animation description script of a first character, a script interpreting means (106) interprets the action tag included in the animation description script of the first character on the basis of the combination with the synchronized action tag included in the animation description script of the second character with reference to a script interpretation table stored in an interpretation table storing means (105). Thus, it is possible to provide an animation reproduction device and a communication network system capable of automatic modification at reproduction of animation having a plurality of characters so that the respective actions of the plurality of characters are coordinated with each other even without modifying the animation description script of the first character.

## Description

### TECHNICAL FIELDS

The present invention relates to an animation transfer device for sending/receiving data for reproduction of animation including a plurality of characters, and an animation reproduction device, an animation reproduction system, an animation reproduction method for reproducing animation including a plurality of characters, and an animation transfer program and an animation reproduction program as well as a storage medium readable by a computer having these programs.

### BACKGROUND OF THE INVENTION

As disclosed in Japanese Unexamined Patent Publication Tokukaihei No. 5-290144 (published on November 5, 1993) and Japanese Unexamined Patent Publication Tokukaihei No. 9-305787 (published on November 28, 1997), a conventionally known animation reproduction device carries out reproduction of animation based on shape data for describing the shape of a character, action patterns for describing action information of the shape data of the character, and an animation description script for describing combinations of the action patterns.

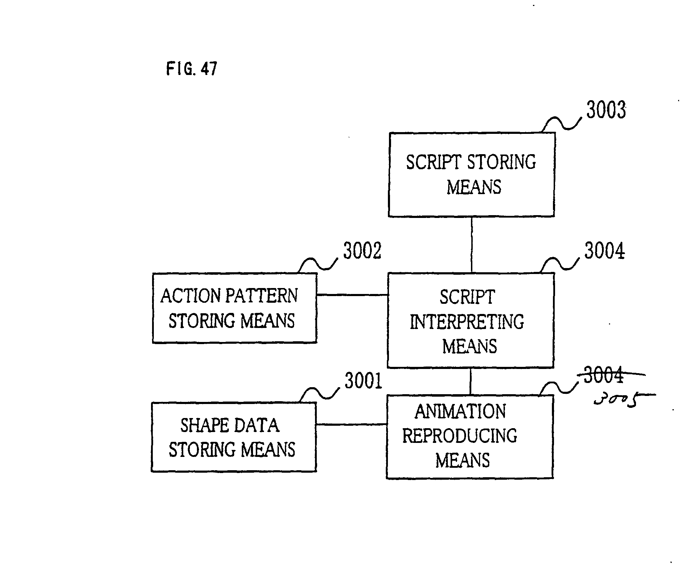

The following will explain an example of the foregoing conventional animation reproduction device with reference to figures. Figure 47 shows an arrangement of a conventional animation reproduction device.

In the figure, 3001 is shape data storing means for storing shape data describing a shape of the character, 3002 is action pattern storing means for storing action patterns, which are action information of the character, 3003 is script storing means for storing an animation description script describing a combination and/or sequence of the action patterns, 3004 is script interpreting means for interpreting the animation description script and associating the script with the action pattern, and 3005 is animation reproducing means for moving the character according to the action patterns associated with the script by the script interpreting means.

The following will explain operation of the animation reproduction device having the foregoing arrangement. Firstly, the script interpreting means 3004 reads out the animation description script stored in the script storing means 3003 and selects an action pattern corresponding to the read out animation description script from the action pattern storing means 3002. Secondly, the animation reproducing means 3005 reads out the shape data stored in the shape data storing means 3001 and changes the shape data according to the selected action pattern so as to reproduce animation.

Further, a match-up type computer game which has been known as a method for reproducing animation with a plurality of characters by acting on each other. In this type of computer game, the player operates a lever or the like while looking at the image on the display so as to play a much against other character.

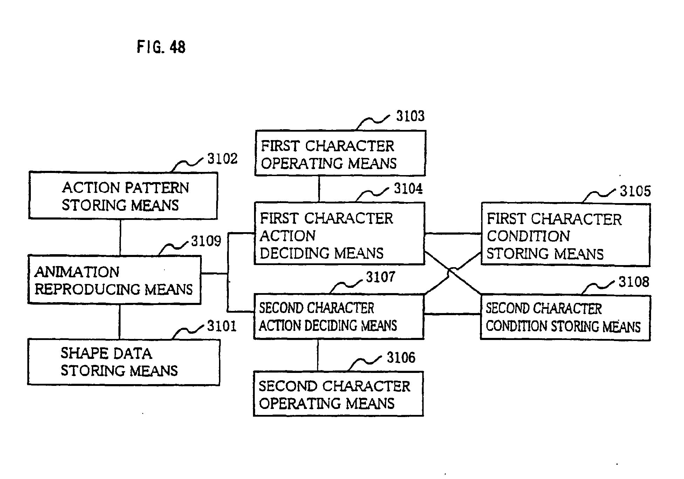

The following will explain an example of animation reproduction method of the conventional match-up type computer game with reference to figures. Figure 48 shows an arrangement of an animation reproduction device of the conventional match-up type computer game. In the figure, 3101 is shape data storing means for storing shape data describing respective shapes of the characters, 3102 is action pattern storing means for storing action patterns, which are action information of the characters, 3103 is first character operating means for operating the first character, 3104 is first character action deciding means for deciding action of the first character and associating the action with the action patterns, 3105 is first character condition storing means for storing a condition parameter, which is an internal parameter regarding condition (for example, a power level, or a remaining energy quantity) of the first character, 3106 is second character operating means for operating the second character, 3107 is second character action deciding means for deciding action of the second character and associating the action with the action patterns, 3108 is second character condition storing means for storing a condition parameter, which is an internal parameter regarding condition of the second character, and 3109 is animation reproducing means for moving the first and second characters according to the action patterns decided by the first character action deciding means and the second character action deciding means.

The following will explain operation of the animation reproduction device having the foregoing arrangement. Firstly, operations of the first and second characters are inputted through the first character operating means 3103 and the second character operating means 3106. Secondly, the first character action deciding means 3104 and the second character action deciding means 3107 select the action patterns corresponding to the operations inputted by the first character operating means 3103 and the second character operating means 3106 from the action pattern storing means 3102 by referring to the first character condition storing means 3105 and the second character condition storing means 3108.

Next, the animation reproducing means 3109 reads out shape data of the first and second characters from the shape data storing means 3101 and changes the shape data according to the action patterns selected by the first character action deciding means 3104 and the second character action deciding means 3107 so as to reproduce animation. Then, the first character action deciding means 3104 and the second character action deciding means 3107 renew the condition parameters of the first and second characters stored in the first character condition storing means 3105 and the second character condition storing means 3108.

Nevertheless, the devices disclosed in Tokukaihei 5-290144 and Tokukaihei 9-305787 carry out animation reproduction according to the animation description script for each character when reproducing animation having a plurality of characters; however, these animation description scripts are independent from each other. Therefore, for example, when creating animation of the second character after creating animation of the first character, the device has no function for making the action of the first character more natural by coordinating a series of actions of the first character with a series of actions of the second character.

Then, if the action of the first character is changed to be associated with the action of the second character, it requires extra work and time for modifying the animation description script of the first character. Further, when the animation description script of the second character is modified to change the action of the second character, the further work and time is undesirably required for modifying the animation description script of the first character.

Further, in the animation reproduction method of the conventional match-up type computer game, it is possible to carry out animation reproduction while deciding the action of the second character according to the condition parameter of the first character, and therefore a plurality of characters can act on each other when reproducing the animation; for example, the second character falls down with a hitting action of the first character.

However, even though this animation reproduction method is made to realize real time and interactive reproduction of the action of the character, and the characters are reacted on each other in real time with every single operation of the first character operating means 3103 or the second character operating means 3106, the method still cannot have function, such as operation for specifying an arbitrary part of the series of animation of the first character so as to change the action of the part corresponding to the action of the second character.

Hence, in communication means, such as exchange of mails including animation, the foregoing method still cannot realize function for carrying out natural movement animation reproduction by coordinating the animation of the first mail with the animation of the response, i.e., function for changing the animation of the first mail to correspond to the animation of the response and reproducing the animation of the first mail with the animation of the response in the device having created the first mail.

### DISCLOSURE OF THE INVENTION

The present invention is made in view of the foregoing conventional problems, and an object is to provide an animation reproduction device, an animation reproduction system, an animation reproduction method, and an animation reproduction program as well as a storage medium readable by a computer having the program, for reproducing animation including a plurality of characters. With these products, the present invention realizes natural movement animation by modifying the action of the first character to be associated with the second character without modifying the animation description script of the first character. This operation is realized by creating the animation description script of the second character to synchronize with an arbitrary part of the animation description script of the first character, which is previously created, and interpreting the animation description script of the first character with reference to the animation description script of the second character.

Further, another object of the present invention is to provide an animation transfer device for sending and receiving data for reproducing animation having a plurality of characters in the foregoing manner, an animation reproduction device connected to the animation transfer device for sending and receiving data for reproducing animation, an animation reproduction system including the animation transfer device and the animation reproduction device, a program for carrying out an animation transfer method or an animation reproduction method as well as a storage medium readable by a computer having the program.

In order to attain the foregoing objects, an animation reproduction device according to the present invention is characterized by including action pattern storing means for storing action information of the characters as action patterns; script storing means for storing an animation description script described with a combination or sequence of action tags for specifying the action patterns; interpretation table storing means for storing a script interpretation table having the action tags and the action patterns associated with each other; script interpreting means for interpreting the animation description script and associating the animation description script with the action patterns by referring to the script interpretation table stored in the interpretation table storing means; and animation reproducing means for moving the characters according to the action patterns associated by the script interpreting means, wherein: arbitrary one of the action tags included in the animation description script of a second character is described to synchronize with arbitrary one of the action tags included in the animation description script of a first character, and the script interpreting means interprets an action tag included in the animation description script of the first character by referring to an action tag which is included in the animation description script of the second character, and which is synchronized with the action tag included in the animation description script of the first character.

Here, the action patterns are prepared information for respectively expressing a basic factor of an action for constituting animation, such as an action of smiling, or an action of waving. For example, when a character is expressed by components of still pictures or moving pictures, which are used in combination, the action is expressed by information regarding the combination of the components or display parameter, which is the position or angle of the components in the character. Further, when the character is expressed by a two-dimensional figure or a three-dimensional shape, the action is expressed by information regarding deformation quantity or display position of the two-dimensional figure or the three-dimensional shape. Animation is made up of combinations of such action patterns.

Further, the action tags are information for specifying any one of the action patterns, and can realize a character's action such as an action of simultaneously smiling and waving by describing a plurality of action tags in combination, and also can express a series of character's action such as an action of jumping followed by an action of running by describing the sequence of the plurality of action tags.

With the foregoing arrangement, when the script interpreting means interprets the action tag included in the animation description script of the first character stored in the script storing means, the script interpreting means refers to the action tag included in the animation description script of the second character stored in the script storing means, and which is synchronized with the action tag of the first character, and then refers to the script interpretation table stored in the interpretation table storing means so as to decide an action pattern of the first character associated with the combination of the action tag of the first character and the action tag of the second character.

With the foregoing manner, the script interpretation means associates the animation description script of the first character with the action patterns stored in the action pattern storing means. Further, the animation reproducing means reproduces animation according to the action of the character expressed by the decided action patterns. Therefore, the action of the first character can be decided with reference to the action of the second character, which is associated with the action of the first character.

With this arrangement, by creating and adding the animation of the second character to the existing animation of the first character so that the animation of the second character is synchronized with an arbitrary part of the first animation, the animation of the first character is modified by the interpretation of the animation description script without modifying the animation description script of the first character. As a result, the animation of the first character and the animation of the second character are associated with each other so as to be reproduced with natural movement.

Note that, the present invention is not limited to the arrangement of only referring to the action tag as a factor to decide the action pattern of the first character at interpretation of the action tag included in the animation description script of the first character.

More specifically, the condition parameter regarding condition of at least one of the first and second characters may also be used as the factor of reference.

On this account, it is possible to reproduce these characters with more natural and subtle movement by using the condition, such as psychology, of one of the first and second characters.

Further, in the script interpretation table, the action tag may be associated with a modification action tag, which is converted according to the combination of the action tag of the first character and the action tag of the second character.

On this account, it is possible to reproduce animation with more variation of the actions of the characters and with natural and meticulous movement.

In order to attain the foregoing objects, an animation transfer device according to the present invention is characterized by including communicating means for sending and receiving an animation description script with respect to a plurality of animation reproduction devices respectively having a function of creating the animation description script described with a combination or sequence of action tags for specifying action patterns, which are action information of characters, and reproducing animation of the characters according to the animation description script, then sending and receiving the animation description script; conversion table storing means for storing a script conversion table for associating combinations of the action tags of a first character and the action tags of a second character with action tags after conversion; and temporary script creating means for creating a temporary animation description script of the first character from a first animation description script by referring to the script conversion table stored in the conversion table storing means, when the first animation description script of the first character created by a first animation reproduction device and a second animation description script of the second character created by a second animation reproduction device as a response to the first animation description script are received by the communicating means, and arbitrary one of the action tags included in the second animation description script of the second character is synchronized with arbitrary one of the action tags included in the first animation description script of the first character, wherein: the temporary animation description script is sent to the first animation reproduction device with the second animation description script.

With the foregoing arrangement, when the second animation description script of the second character received from the second animation reproduction device connected to the animation transfer device of the present invention by the communicating means is transferred to the first animation reproduction device connected to the animation transfer device by the communicating means, and arbitrary one of the action tags included in the second animation description script of the second character is synchronized with arbitrary one of the action tags included in the first animation description script of the first character created by the first animation reproduction device, temporary script creating means creates a temporary animation description script of the first character from the first animation description script by referring to the script conversion table stored in the conversion table storing means.

With the foregoing manner, the temporary script creating means creates a temporary animation description script of the first character from the first animation description script by referring to the action of the second character associated with the action of the first character.

With this arrangement, by creating and adding the animation of the second character to the existing animation of the first character so that the animation of the second character is synchronized with an arbitrary part of the first animation, the first animation reproduction device can carry out reproduction of the animation of the first character modified due to the temporary animation description script without modifying the animation description script of the first character.

Thus, by sending the temporary animation description script with the second animation description script of the second character which has been received from the second animation reproduction device and is to be transferred to the first animation reproduction device, it is possible to associate the animation of the first character with the animation of the second character so as to reproduce the characters with natural movement.

Further, as described, since the animation transfer device of the present invention creates and transfers the temporary animation description script of the first character, advanced animation reproduction can be realized even when the first animation reproduction devices is a terminal with low throughput such as a portable information processing terminal or a mobile phone.

Note that, the configuration of the animation transfer device of the present invention is not limited to the arrangement as an intermediary device between the respective animation reproduction devices for sending and receiving the animation description script with respect to those animation reproduction devices, and the same may also be adopted for the arrangement such that the respective animation reproduction devices carry out sending and receiving of the animation description script from/to each other so as to send and receive animation of the respective characters, and then one of the animation reproduction devices sends a plurality of animation description scripts for reproducing animation having a plurality of characters to the animation transfer device.

More specifically, for example, the configuration may be arranged as follows: the second animation reproduction device receives the first animation description script directly from the first animation reproduction device, and the second animation reproduction device creates the second animation description script synchronized with an arbitrary action tag included in the first animation description script, and the animation transfer device receives the first animation description script and the second animation description script from the second animation reproduction device, and then transfers the temporary animation description script of the first character and the second animation description script to the first animation reproduction device.

In this case, the animation transfer device does not have to previously receive and store the animation description script used for creating the temporary animation description script before receiving the animation description script as a response.

In order to attain the foregoing objects, an animation reproduction device according to the present invention is characterized by including communicating means for carrying out communication with the animation transfer device; action pattern storing means for storing action information of characters as action patterns; interpretation table storing means for storing a script interpretation table for associating action tags for specifying the action patterns with the action patterns; script interpreting means for interpreting an animation description script which is described with a combination or sequence of the action tags for specifying the action patterns, and associating the animation description script with the action patterns by referring to the script interpretation table stored in the interpretation table storing means; and animation reproducing means for moving the characters according to the action patterns associated by the script interpreting means.

With the foregoing arrangement, the script interpreting means associates the animation description script with the action patterns stored in the action pattern storing means by referring to the script interpretation table. Further, the animation reproducing means reproduces animation according to the action of the character expressed by the decided action patterns.

On this account, it is possible to interpret the temporary animation description script of the first character and the second animation description script of the second character received from the animation transfer device via the communicating means so as to move the first and second characters.

Thus, since the animation reproduction device of the present invention receives the temporary animation description script of the first character created by the animation transfer device with the animation of the second character synchronized with the animation of the first character transferred by the animation transfer device, the animation of the first character and the animation of the second character are associated with each other so as to be reproduced with natural movement.

Further, since the animation reproduction device of the present invention does not require an arrangement for creating the temporary animation description script, it is possible to save information storage quantity of the action pattern storing means and the interpretation table storing means, and reduce processing imposition of the script interpreting means, thereby realizing advanced animation reproduction even with a terminal with low throughput such as a portable information processing terminal or a mobile phone.

Additional objects, features, and strengths of the present invention will be made clear by the description below. Further, the advantages of the present invention will be evident from the following explanation in reference to the drawings.

### BRIEF DESCRIPTION OF THE DRAWINGS

Figure 1 is a block diagram showing an arrangement of an animation reproduction device according to First Embodiment of the present invention.
Figure 2 is a drawing showing an example of shape data.
Figure 3 is a drawing showing an example of a combination of the shape data expressing a face.
Figure 4 is a drawing showing an example of an action pattern.
Figure 5 is a drawing showing an example where a character is moved by changing some parts according to an action pattern.
Figure 6 is a drawing showing an example where a character is moved by changing the position of the parts.
Figure 7 is a drawing showing an example of an animation description script.
Figure 8 is a drawing showing an example of animation reproduction according to a unit script included in the animation description script.
Figure 9 is a drawing showing an example of animation reproduction according to the next unit script included in the animation description script.
Figure 10 is a drawing showing an example of animation reproduction according to the yet next unit script included in the animation description script.
Figure 11 is a drawing showing an example of the animation description script of the other character described in synchronism with the foregoing animation description script.
Figure 12 is a drawing showing an example of a script interpretation table.
Figure 13 is a drawing showing an example where the first character is moved according to the unit script included in the animation description script shown in Figure 7.
Figure 14 is a drawing showing an example where the second character is moved according to a unit script synchronized with the foregoing unit script.
Figure 15 is a drawing showing an example where the first character is moved according to the next unit script included in the animation description script shown in Figure 7.
Figure 16 is a drawing showing an example of animation reproduction by interpreting the unit script of the first character used in Figure 15 with reference to the next unit script of the second character according to the script interpretation table.
Figure 17 is a drawing showing an example where the first character is moved according to the yet next unit script included in the animation description script shown in Figure 7.
Figure 18 is a drawing showing an example of animation reproduction by interpreting the unit script of the first character used in Figure 17 with reference to the yet next unit script of the second character according to the script interpretation table.
Figure 19 is a flow chart showing an operation procedure of animation reproduction.
Figure 20 is a block diagram showing an arrangement of an animation reproduction device according to Second Embodiment of the present invention.
Figure 21 is a drawing showing another example of the animation description script.
Figure 22 is a drawing showing another example of the script interpretation table.
Figure 23 is a drawing showing an example where the first and second characters are moved according to the unit script at 0ms after the start of reproduction, which is included in the animation description script shown in Figure 21.
Figure 24 is a drawing showing an example where the first and second characters are moved according to the unit script at 2000ms after the start of reproduction, which is included in the animation description script shown in Figure 21.
Figure 25 is a drawing showing an example where the first and second characters are moved according to the unit script at 4000ms after the start of reproduction, which is included in the animation description script shown in Figure 21.
Figure 26 is a drawing showing an example where the first and second characters are moved according to the unit script at 6000ms after the start of reproduction, which is included in the animation description script shown in Figure 21.
Figure 27 is a drawing showing an example where the first and second characters are moved according to the unit script at 8000ms after the start of reproduction, which is included in the animation description script shown in Figure 21.
Figure 28 is a drawing showing an example where the first and second characters are moved according to the unit script at 11000ms after the start of reproduction, which is included in the animation description script shown in Figure 21.
Figure 29 is a drawing showing an example where the first and second characters are moved with high level of good impression according to the unit script at 0ms after the start of reproduction, which is included in the animation description script shown in Figure 21.
Figure 30 is a drawing showing an example where the first and second characters are moved according to the unit script at 2000ms after the start of reproduction, which is included in the animation description script shown in Figure 21.
Figure 31 is a drawing showing an example where the first and second characters are moved according to the unit script at 4000ms after the start of reproduction, which is included in the animation description script shown in Figure 21.
Figure 32 is a drawing showing an example where the first and second characters are moved according to the unit script at 6000ms after the start of reproduction, which is included in the animation description script shown in Figure 21.
Figure 33 is a drawing showing an example where the first and second characters are moved according to the unit script at 8000ms after the start of reproduction, which is included in the animation description script shown in Figure 21.
Figure 34 is a drawing showing an example where the first and second characters are moved according to the unit script at 11000ms after the start of reproduction, which is included in the animation description script shown in Figure 21.
Figure 35 is a flow chart showing another operation procedure of animation reproduction.
Figure 36 is a block diagram showing an arrangement of an animation reproduction system according to the third embodiment of the present invention.
Figure 37 is a drawing showing a concrete example of a screen for creating a new animation description script by using script creating means.
Figure 38 is a drawing showing a concrete example of a screen for creating an animation description script as a response with reference to the received animation description script by using script creating means.
Figure 39 is a block diagram showing an arrangement of an animation reproduction system according to the fourth embodiment of the present invention.
Figure 40 is a drawing showing a concrete example of a screen for creating a new animation description script by using script creating means.
Figure 41 is a drawing showing a concrete example of a screen for creating an animation description script as a response with reference to the received animation description script by using script creating means.
Figure 42 is a drawing showing an example of a temporary script created by temporary script creating means by using the foregoing animation description script and other character's animation description script described in synchronism with the foregoing animation description script.
Figure 43 is a drawing showing another example of an animation description script and other character's animation description script described in synchronism with the animation description script.
Figure 44 is a drawing showing an example of a temporary script created by temporary script creating means by using the foregoing animation description script and other character's animation description script described in synchronism with the foregoing animation description script.
Figure 45 is a flow chart showing an operation procedure for creating a temporary animation description script for the first character.
Figure 46 is a flow chart showing another operation procedure for creating a temporary animation description script for the first character.
Figure 47 is a block diagram showing an arrangement example of a conventional animation reproduction device.
Figure 48 is a block diagram showing another arrangement example of the conventional animation reproduction device.

### BEST MODE FOR CARRYING OUT THE INVENTION

### [FIRST EMBODIMENT]

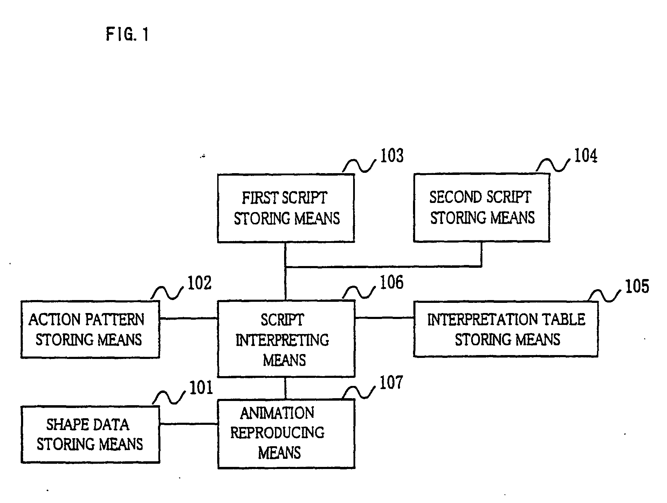

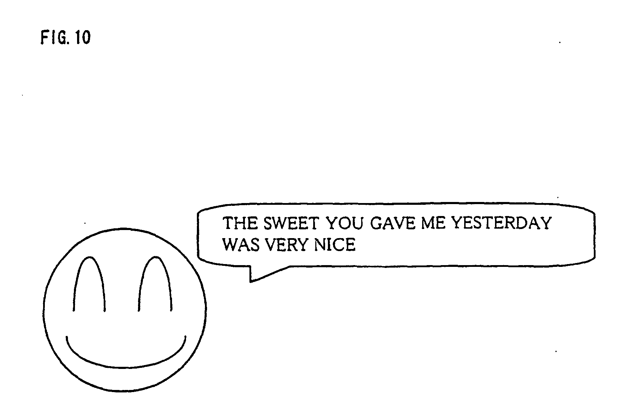

The following will explain one embodiment of the present invention with reference to Figures 1 through 19.

Figure 1 is a block diagram showing an arrangement of an animation reproduction device according to one embodiment of the present invention.

In Figure 1, 101 is shape data storing means for storing shape data, expressed by a two-dimensional figure or a three-dimensional shape, which is a whole character or a component for making up the character, 102 is action pattern storing means for storing action patterns, which are prepared information of basic action factors of the character, 103 is first script storing means for storing an animation description script describing a combination or sequence of action tags for specifying the action patterns that make up animation of a first character, 104 is second script storing means for storing an animation description script describing a combination or sequence of action tags for specifying the action patterns that make up animation of a second character, 105 is interpretation table storing means for storing a script interpretation table having the action tags and action patterns associated with each other, 106 is script interpreting means for reading out a target action tag of the first character from the first script storing means 103 and reading out an action tag of the second character synchronized with the target action tag of the first character from the second script storing means 104 so as to decide the action pattern of the first character associated with the combination made up of the action tag of the first character and the action tag of the second character by referring to the script interpretation table stored in the interpretation table storing means 105, 107 is animation reproducing means for reading out the action pattern decided by the script interpreting means 106 from the action pattern storing means 102 and changing the shape data stored in the shape data storing means 101 by changing the combination of the parts making up the first character or a display parameter such as display position or display angle of the whole first character or parts making up the first character according to the content of the action pattern so as to move the first character for animation reproduction.

The first script storing means 103 and the second script storing means 104 may be provided either as one storing means or as separate storing means. Further, the animation description script stored in the first script storing means 103 and the second script storing means 104 may be inputted from means for inputting animation or may be transferred via an external storing device, such as a floppy disk® or a CD-ROM, or via a network.

The described means may be directly connected to each other, or may be connected via a network using a phone line, radio transmission, or the Internet etc.

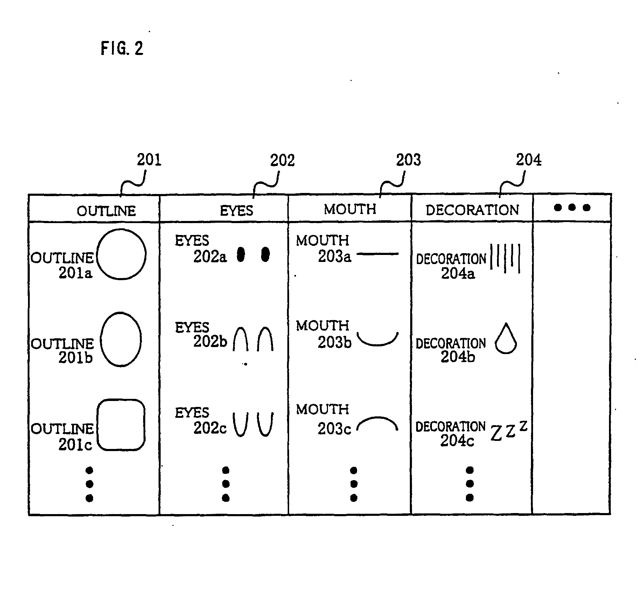

Figure 2 shows an example of shape data stored in the shape data storing means 101. The shape data storing means 101 stores bitmapped images of parts for making up a face, such as an outline 201, eyes 202, a mouth 203, a decoration 204 etc. These parts are used in combination for expressing a face.

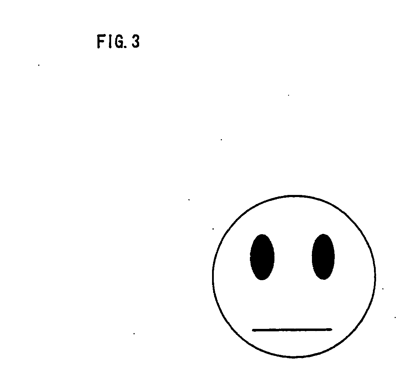

Figure 3 shows an example of a face made up of an outline 201a, eyes 202a, and a mouth 203a shown in Figure 2. A standard value of the display parameter such as the position of parts, rotation angle, enlargement ratio etc. required for combining the parts may be stored for each part, or may be separately stored as a common value for whole parts.

The foregoing example uses a bitmapped image as the shape data; however, the figure data made up of two-dimensional vector data such as a straight line or a circular arc, or the shape data made up of three-dimensional data such as a polygon may also be used. Further, the foregoing example expresses a face; however, whole body of a human being or a character other than a human being can also be created.

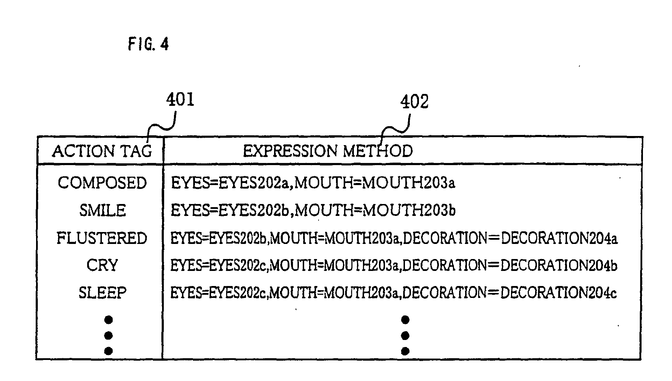

Figure 4 shows an example of an action pattern stored in the action pattern storing means 102. The action pattern is made up of an action tag 401 and an expression method 402. The expression method 402 is a combination of the shape data and is stored by being associated with each action tag 401 which specifies the action pattern. For example, for an action tag of "smile", an expression method specifying eyes 202b and a mouth 203b shown in Figure 2 is stored. Accordingly, the character shown in Figure 3 is recognized as the action tag of "composed", as it is made up of the eyes 202a and the mouth 203a as thus described.

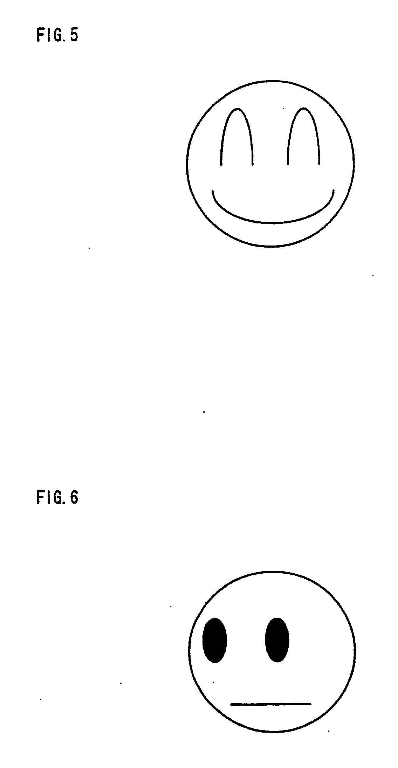

In this manner, when the animation reproducing means 107 displays the character with a combination of the shape data stored in the shape data storing means 101 according to the expression method corresponding to the action pattern indicated by the action tag of "smile", the parts for expressing the eyes and the mouth are changed from those shown in Figure 3 to those shown in Figure 5.

Note that, the display position of various parts for making up the shape of the character is determined with a default value of the shape data corresponding to each part. The display position of each part is fixed to the same position unless the default value is renewed.

The foregoing example expresses the action pattern by changing the parts; however, the action pattern may also be expressed by changing the display parameter, i.e., the default value, such as the position of the parts, the rotation angle, the enlargement ratio etc. The action pattern storing means 102 previously stores the action pattern according to the change of the display parameter so as to change the action pattern with the change of the display parameter. In this case, the animation reproducing means 107 displays the character by combining the shape data stored in the shape data storing means 101 according to the display parameter such as the position of the parts, the rotation angle, the enlargement ratio etc. so as to reproduce animation according to the action pattern. Figure 6 shows an example of expressing an action of "look" by changing the position of the eyes of the face of Figure 3.

Further, the foregoing example expresses the action pattern by moving the parts by one stage; however, the parts can be moved by multiple stages for expressing more smooth animation, or for providing a wider range of expression. Further, in the case of expressing the action pattern by changing the display parameter such as the position of the parts, the rotation angle, the enlargement ratio etc., or in the case of using the figure data made up of two-dimensional vector data or using the shape data made up of three-dimensional data such as a polygon, smooth animation reproduction can be realized by using a publicly-known method for a key frame interpolation.

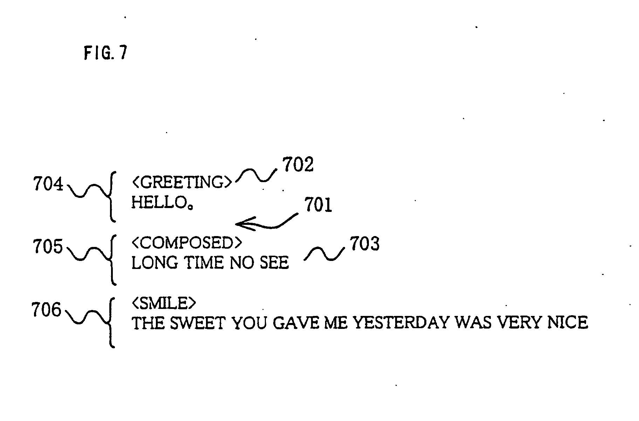

Figure 7 shows an example of the first character animation description script stored in the first script storing means 103. The blank line 701 is a dividing line indicating a range of one interpretation when the script interpreting means 106 carries out interpretation of the animation description script. Hereinafter, the range of one interpretation divided by the blank line is referred to as a unit script.

The character string 702 with an angle bracket (<>) included in each unit script is an action tag, and describes the action tag 401 stored in the action pattern storing means 102. Further, the character string 703 other than the action tag denotes a conversation line (described later).

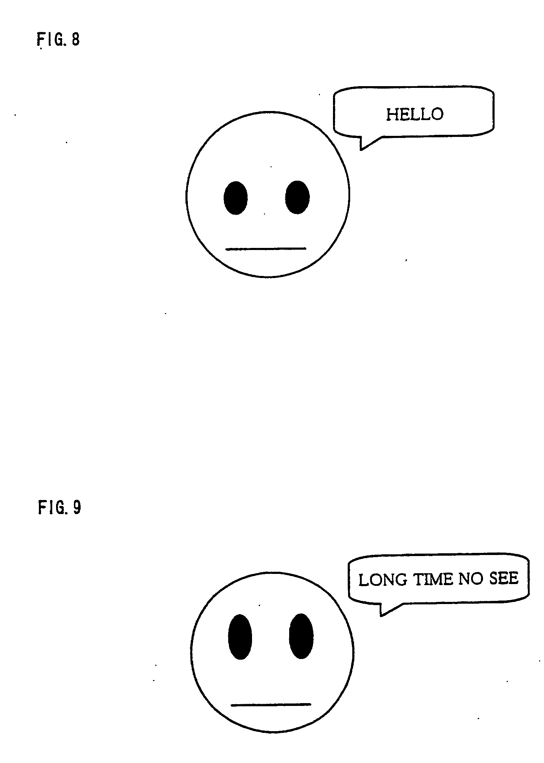

Figures 8 through 10 show an example of animation reproduction of the example of the first character animation description script shown in Figure 7 in such a manner that the script interpreting means 106 reads each unit script from the first script storing means 103, and decides the action pattern specified by the action tag 702, then the animation reproducing means 107 renews the display of the character according to the action pattern. Figures 8, 9, and 10 respectively show the display of the character, which is renewed according to the respective unit scripts 704, 705, and 706. In each figure, each action tag 702 in the unit scripts 704 through 706 is reproduced as an action of the character, and each conversation line in the unit scripts 704 through 706 is written in a balloon as the utterance during the operation.

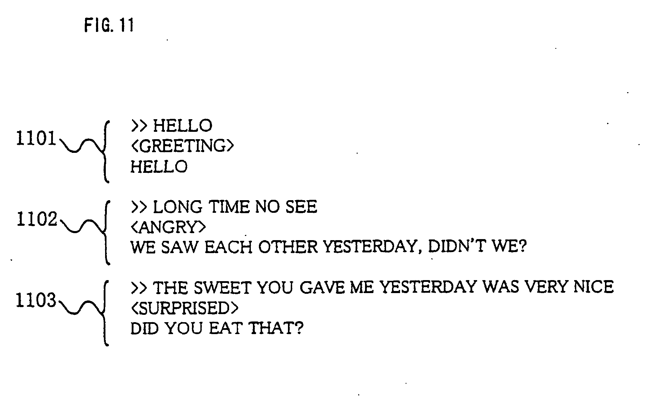

Figure 11 shows an example of the second character animation description script describing animation of the second character associated with the first character animation description script shown in Figure 7. In the figure, » is a symbol denoting a quote character string, which is quoted from the conversation line of the first character animation description script shown in Figure 7. By thus describing the quote character string, the first character animation description script and the second character animation description script are synchronized with each other.

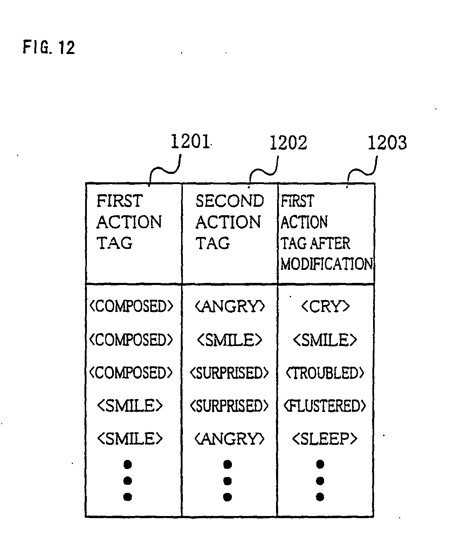

Figure 12 shows an example of the script interpretation table stored in the interpretation table storing means 105. The script interpretation table stores a first action tag after modification 1003 for specifying the action pattern after modification so as to create an associated action, such as reaction of the first character with respect to the action of the second character or the like. The first action tag after modification 1003 is associated with each combination made up of the first action tag 1001 for specifying the action pattern of the first character and the second action tag 1002 for specifying the action pattern of the second character. In this example, the first action tag 1001, the second action tag 1002, and the first action tag after modification 1003 have the same description as that of the action tag 401 shown in Figure 4.

Further, the action tag of the first action tag after modification 1003 is written with the bracket [], which indicates the action tag is used for displaying the action of the first character as animation by synchronizing the animation of the first character with the animation of the second character at the time of display of the second character as animation. However, it should be noted that the action tag of the first action tag after modification 1003 may be written with an angle bracket (<>) as with the first action tag 1001 and the second action tag 1002.

The following will explain the procedure of interpretation of the first character animation description script by the script interpreting means 106 according to the script interpretation table stored in the interpretation table storing means 105 by using the example of the script interpretation table shown in Figure 12.

For example, when the action tag of <composed> is interpreted in the first character animation description script, and the action tag of <angry> is interpreted in the second character animation description script, which is synchronized with the action tag of the first character, the first action tag after modification 1003 will be [cry] for that combination of the first action tag of <composed> and the second action tag of <angry> according to the script interpretation table shown in Figure 12.

Thus, in the interpretation, the script interpretation means 106 modifies the action tag of <composed> in the first character animation description script to the action tag of [cry], and also associates the action pattern associated with the action tag of [cry] with the action tag of <composed> under the interpretation with reference to the action pattern (see Figure 4) stored in the action pattern storing means 102.

In the example of the script interpretation table shown in Figure 12, only the first action tag after modification 1003 is stored for each combination made up of the first action tag 1001 and the second action tag 1002; however, the second action tag after modification may also be stored for each combination of the first action tag 1001 and the second action tag 1002. With this arrangement, both the action pattern of the first character and the action pattern of the second character can be modified, thereby realizing animation reproduction with a natural movement in better coordination.

Further, in the example of the script interpretation table shown in Figure 12, the first action tag after modification 1003 is uniquely associated with each combination of the first action tag 1001 and the second action tag 1002; however, a plurality of the first action tags after modification 1003 may be associated with each combination of the first action tag 1001 and the second action tag 1002. When a plurality of the first action tags after modification 1003 are associated with each combination, the script interpreting means 106 may select one of the first action tag after modification 1003 among the associated plurality of first action tags after modification 1003 according to probability by referring to the script interpretation table, or may select one in a sequential order.

As an example of the foregoing method of selecting one according to probability, the script interpreting means 106 generates a random number so as to select one of the first action tags after modification 1003. For example, when the number of the associated first action tag after modification 1003 is *n*, the script interpreting means 106 first generates a random number *r* of not less than 0 but less than 1, and works out an integer *a* which is not more than *r×n*, then selects *a*-th first action tag after modification 1003 among the associated first action tags after modification 1003. In this manner, all of the *n* first action tags after modification 1003 have an even probability to be selected; however, the probability can respectively be set for each first action tag after modification 1003 by previously determining the probability for each action tag after modification 1003 and adjusting the range of the random number according to the determined probability for selecting one of the first action tag after modification 1003.

Further, as an example of the foregoing method of selecting one in a sequential order, the script interpreting means 106 sequentially selects the plurality of first action tags after modification 1003 associated with a combination of the first action tag 1001 and the second action tag 1002. For example, if the script interpreting means 106 previously selects *i*-th first action tag after modification 1003 for a combination of the first action tag 1001 and the second action tag 1002, the value of *i* is increased by 1 for selecting the same combination of the first action tag 1001 and the second action tag 1002 next time, then, when the value of *i* becomes larger than the number of the associated first action tag after modification 1003, the value of *i* is reset to 1. In this manner, the plurality of first action tags after modification 1003 can be selected in a sequential order.

As described, even when plurality of the associated first action tag after modification 1003 exist, it is possible to select a different first action tag after modification 1003 for repeatedly selecting the same combination of the first action tag 1001 and the second action tag 1002, thereby providing variety of the display to keep the user amused.

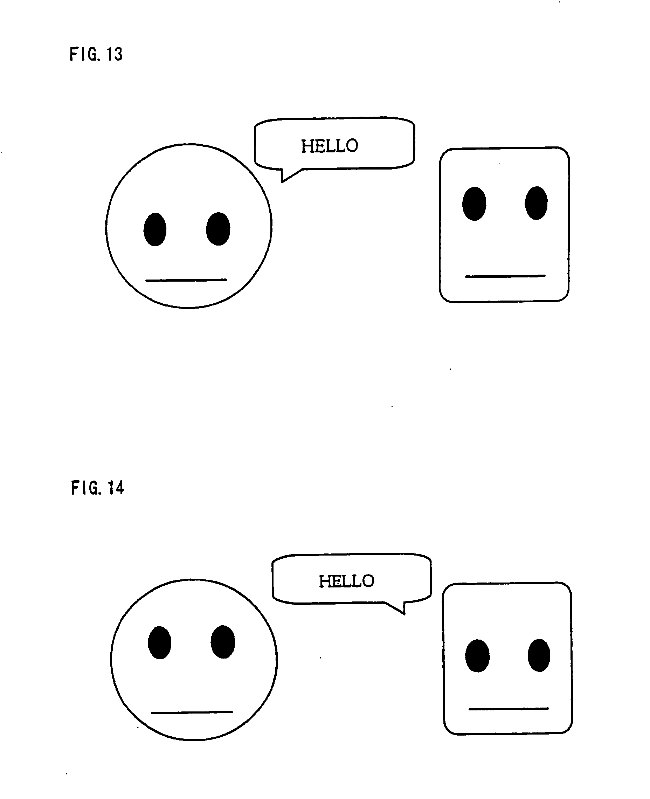

Figures 13 through 18 show an example where the script interpreting means 106 interprets the example of the first character animation description script shown in Figure 7 and the example of the second character animation description script shown in Figure 11 with reference to the example of the script interpretation table shown in Figure 12, and the animation reproducing means 107 reproduces the scripts as animation according to the example of the action pattern shown in Figure 4.

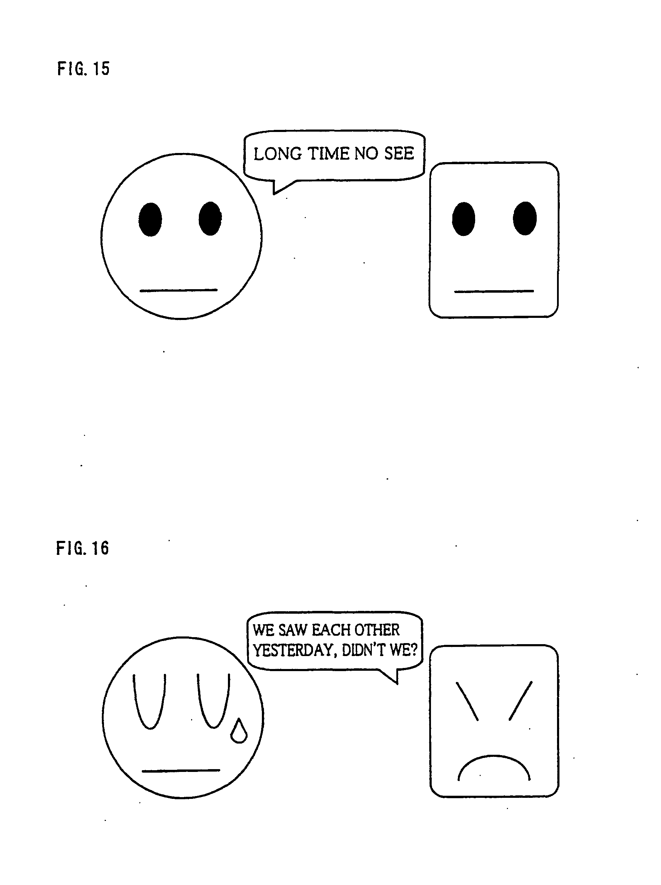

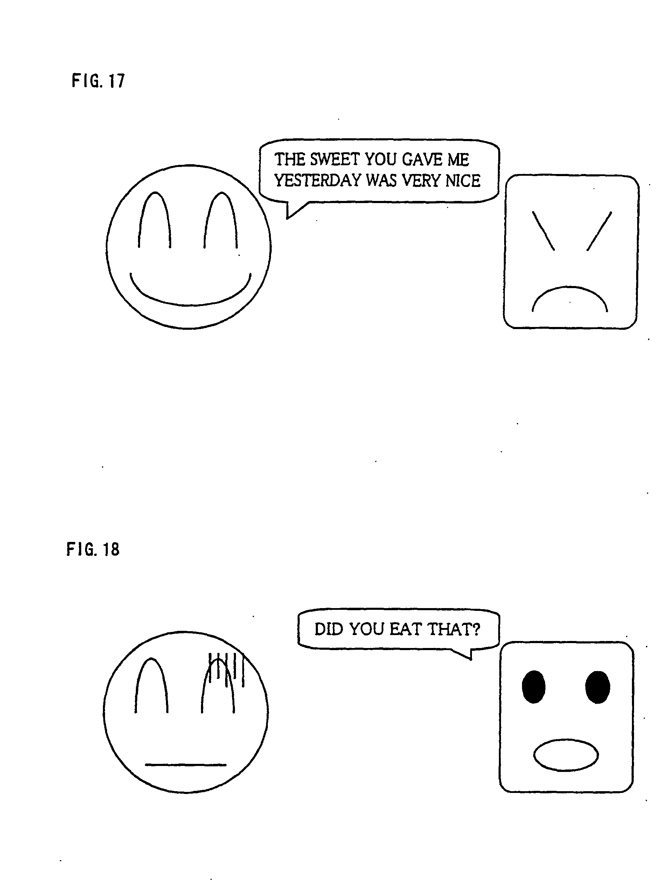

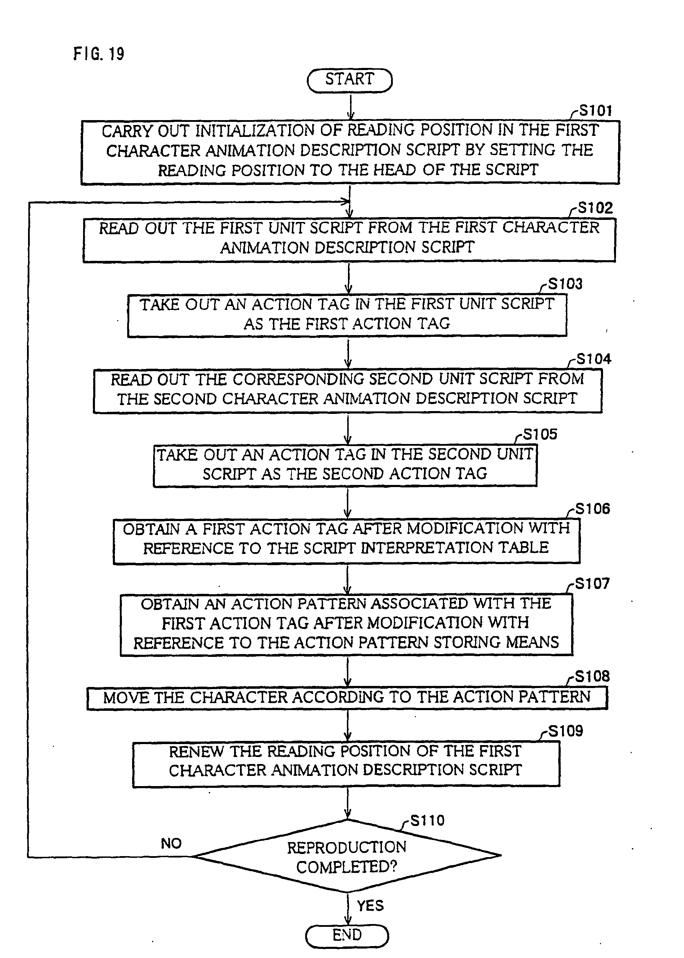

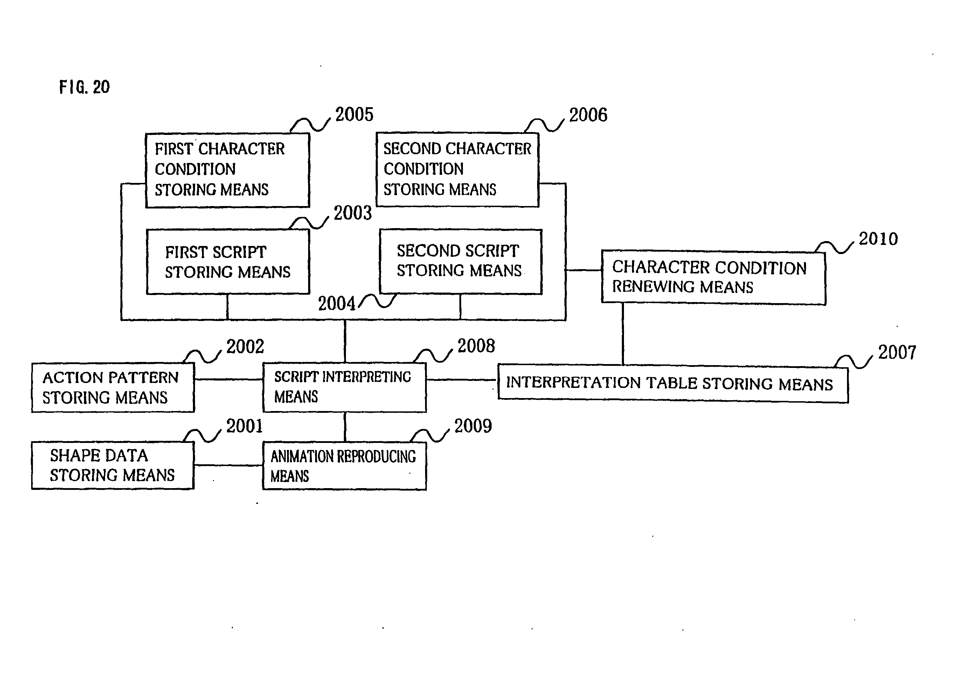

Those figures respectively show a scene of the motion of the character by interpretation of the script interpreting means 106 with respect to the unit script 704 of Figure 7 in Figure 13, the unit script 1101 of Figure 11 in Figure 14, the unit script 705 of Figure 7 in Figure 15, the unit script 1102 of Figure 11 in Figure 16, the unit script 706 of Figure 7 in Figure 17, the unit script 1103 of Figure 11 in Figure 18, the unit script 707 of Figure 7 in Figure 19, the unit script 1104 of Figure 11 in Figure 20. In those figures, the character on the left side is the first character, and the character on the right side is the second character.

Since the unit script 705 of Figure 7 with the action tag of "composed" is adopted for the first character in Figure 15, and the unit script 1102 of Figure 11 with the action tag of "angry" is adopted for the second character in Figure 16 so as to correspond to the action tag of the first character in Figure 15, the script interpreting means 106 refers to the script interpretation table shown in Figure 12 and interprets the action of the first character to meet the first action tag after modification 1003 of "cry", which is associated with the combination of the first action tag 1001 of "composed" and the second action tag 1002 of "angry". The animation reproducing means 107 refers to the example of the action pattern shown in Figure 4 and moves the first character with the action pattern associated with the first action tag after modification 1003 of "cry". Figure 16 shows face expression of the first and second characters as the result of the foregoing operation.

Similarly, since the unit script 706 of Figure 7 with the action tag of "smile" is adopted for the first character in Figure 17, and the unit script 1103 of Figure 11 with the action tag of "surprised" is adopted for the second character in Figure 18 so as to correspond to the action tag of the first character in Figure 17, the script interpreting means 106 refers to the script interpretation table shown in Figure 12 and interprets the action of the first character to meet the first action tag after modification 1003 of "flustered", which is associated with the combination of the first action tag 1001 of "smile" and the second action tag 1002 of "surprised". The animation reproducing means 107 refers to the example of the action pattern shown in Figure 4 and moves the first character with the action pattern associated with the first action tag after modification 1003 of "flustered". Figure 18 shows face expression of the first and second characters as the result of the foregoing operation.

Figure 19 is a flow chart of animation reproduction by an animation reproduction device having the arrangement shown in Figure 1.

Firstly, the script interpreting means 106 carries out initialization of the reading position for starting readout of a unit script in the animation description script of the first character stored in the first script storing means 103 by setting the reading position to the head of the script (Step S101).

Next, the script interpreting means 106 reads out a unit script at the reading position from the first script storing means 103, and stores the unit script as the first unit script (step S102).

Next, the script interpreting means 106 takes out the action tag in the first unit script thus read out in the step S102, and stores the action tag as the first action tag 1001 (step S103).

Next, the script interpreting means 106 reads out a unit script synchronized with the first unit script thus read out in the step S102 from the animation description script for the second character stored in the second script storing means 104, and stores the unit script as the second unit script (step S104). In the examples shown in Figures 7 and 11, the script interpreting means 106 carries out search in the first character animation description script shown in Figure 7 so as to find a unit script including the same quote character string as the one denoted with >> in the second character animation description script shown in Figure 11, which is regarded as the unit script synchronized with the first unit script.

Next, the script interpreting means 106 takes out the action tag in the second unit script thus read out in the step S104, and stores the action tag as the second action tag 1002 (step S105).

Next, the script interpreting means 106 obtains a first action tag after modification 1003 associated with the combination of the first action tag 1001 taken out in the step S103 and the second action tag 1002 taken out in the step S105 with reference to the script interpretation table (step S106).

Next, the script interpreting means 106 obtains an action pattern associated with the first action tag after modification 1003 thus obtained in the step S106 with reference to the action pattern storing means 102 (step S107).

Next, the animation reproducing means 107 moves the character according to the action pattern thus obtained in the step S107 (S108).

Next, the script interpreting means 106 moves the reading position for reading out a unit script from the first script storing means 103 to the next unit script (step S109). In the case where no more unit scripts exist, the script interpreting means 106 sets a value EOF in the reading position so as to indicate that the reading position reaches to the end of the animation description script stored in the first script storing means 103.

Next, the script interpreting means 106 judges whether or not the value EOF is set in the reading position, i.e., the read out of the animation description script stored in the first script storing means 103 is completed (step S110). When the value EOF is set, the script interpreting means 106 finishes the reproduction operation. Otherwise, the script interpreting means 106 carries on the operation back from the step S102.

The operation thus explained with the flow chart in Figure 19 is carried out with respect to the first character; however, the same operation can be carried out simultaneously with respect to the second character, thereby simultaneously reproducing animation having a plurality of characters. Further, as another method for simultaneously reproducing animation having a plurality of characters, the script interpreting means 106 may carry out the reproduction operation by moving the reading position between a plurality of animation description scripts so as to sequentially read out and process the plurality of animation description scripts.

As described, in the present invention, when an action tag included in the first character animation description script is associated with the action pattern (interpreted), the associated action pattern is modified by referring to the second character animation description script. Thus, it is possible to associate the action of the first character with the action of the second character at reproduction without changing the first character animation description script stored in the first character animation description script section 103.

### [SECOND EMBODIMENT]

The following will explain another embodiment of the present invention with reference to Figures 20 through 35.

In the concrete example shown in First Embodiment, the same action pattern after modification is adopted for the same combination of the action patterns of plurality of the characters. This is because only one kind of the first action tag after modification 1003 is associated with a combination of the first action tag 1001 and the second action tag 1002 in the script interpretation table shown in Figure 12.

On the other hand, the present embodiment vary the action pattern after modification with respect to the same combination of the action patterns by using a condition parameter, such as psychology of the character, in order to realize reproduction with more natural movement meeting the flow of the animation.

Figure 20 is a block diagram showing an arrangement of an animation reproduction device according to Second Embodiment of the present invention.

In the figure, shape data storing means 2001, action pattern storing means 2002, first script storing means 2003, second script storing means 2004, and animation reproducing means 2009 are respectively similar to the shape data storing means 101, the action pattern storing means 102, the first script storing means 103, the second script storing means 104, and the animation reproducing means 107 described in First Embodiment with Figure 1.

2005 is first character condition storing means for storing a condition parameter indicating the condition of the first character, 2006 is second character condition storing means for storing a condition parameter indicating the condition of the second character, 2007 is interpretation table storing means for storing a script interpretation table having the action pattern associated with a combination made up of the action tag and the condition parameter.

Further, 2008 is script interpreting means for reading out a target action tag of the first character from the first script storing means 2003 and reading out an action tag of the second character synchronized with the target action tag of the first character from the second script storing means 2004, and reading out the condition parameter stored in the first character condition storing means 2005 and /or the second character condition storing means 2006 so as to decide the action pattern associated with the combination made up of the action tag of the first character, the action tag of the second character, and the condition parameter by referring to the script interpretation table stored in the interpretation table storing means 2007.

Further, 2010 is character condition renewing means for reading out a target action tag of the first character from the first script storing means 2003 and reading out an action tag of the second character synchronized with the target action tag of the first character from the second script storing means 2004, and reading out the condition parameter stored in the first character condition storing means 2005 and /or the second character condition storing means 2006 so as to decide a correction value of the condition parameter associated with the combination made up of the action tag of the first character, the action tag of the second character, and the condition parameter by referring to the script interpretation table stored in the interpretation table storing means 2007, and renewing the condition parameter stored in the first character condition storing means 2005 and /or the second character condition storing means 2006 according to the correction value.

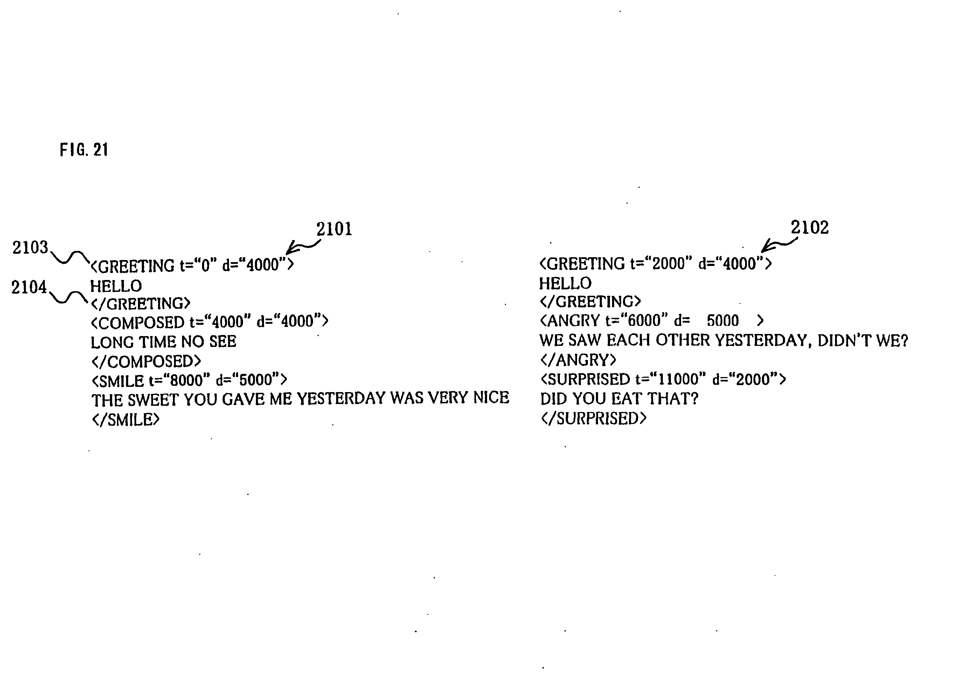

Figure 21 shows an example of the first character animation description script and the second character animation description script. In the figure, 2101 is an example of the first character animation description script, and 2102 is an example of the second character animation description script. A character string 2103 with an angle bracket (<>) is the action tag describing the action tag stored in the action pattern storing means 2002.

The animation description script in this example adopts a description mode generally known as a SGML (Standard Generalized Markup Language) or a XML (Extensible Markup Language). Thus, in the first action tag 2103 '<greeting t="0" d="4000">', 'greeting' denotes an element name indicating type of the action tag, 't="0'" denotes an attribute indicating that the start time of the action patterns expressed by this action tag is 0ms after the reproduction start time of the whole animation, and 'd="4000"' denotes an attribute indicating that the duration of the action pattern expressed by this action tag is 4000ms.

By thus describing information of animation reproduction time for each action tag, it becomes possible to refer to a synchronizing action tag among the action tags included in a plurality of animation description scripts. For example, at the time of 6000ms after the reproduction start time of the whole animation, since the animation reproduction is carried out according to the action pattern associated with the action tag of '<composed t="4000" d="4000">' in the first character animation description script 2101, and the action tag of '<angry t="6000" d="5000">' in the second character animation description script 2102, these action tags are regarded as being synchronized with each other.

Further, the element name between </ and > is an end tag associated with the action tag, and a range from the action tag to the end tag makes the unit script. For example, the end tag 2104 is provided to correspond to the action tag 2103. Further, the character string provided between the action tag and the end tag denotes the conversation line.

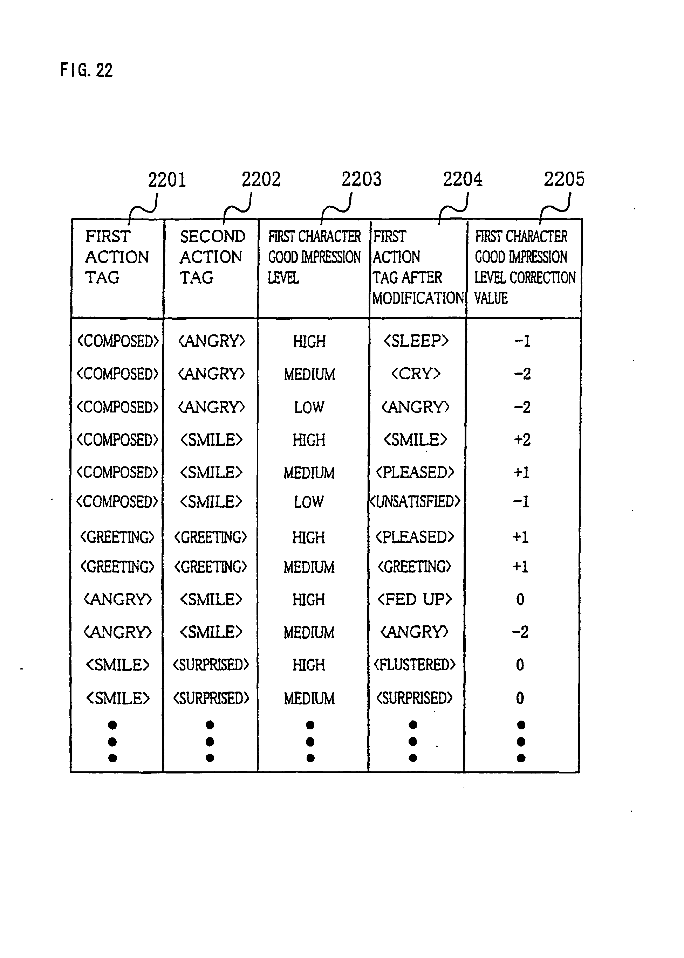

Figure 22 shows an example of the script interpretation table stored in the interpretation table storing means 2007. In this example, the condition parameter of the character is expressed as a good impression level to the other character. According to this script interpretation table, a first action tag after modification 2204 for specifying the action pattern after modification providing an action to be associated with the other character, such as reaction of the first character to the second character, and a first character good impression level correction value 2205 for correcting the condition parameter of the first character so as to vary the good impression level of the first character according to the action of the second character are stored for each combination made up of the first action tag 2201 for specifying the action pattern of the first character, the second action tag 2202 for specifying the action pattern of the second character, and a first character good impression level 2203 as an example of the condition parameter of the first character.

In the foregoing example, the good impression level as the condition parameter is stored in the interpretation table storing means 2007 with three simplified good impression levels of "high", "medium", and "low; however, in the first character condition storing means 2005 and in the second character condition storing means 2006, the good impression level is stored with an integer in a range from -10 to +10, for example.

In this case, in the first character good impression level 2203, the good impression level of "high" corresponds to the good impression level of not less than +4, the good impression level of "medium" corresponds to the good impression level of not less than -3 but not more than +3, and the good impression level of "low" corresponds to the good impression level of not more than -4.

The explained range of the value of the good impression level or the number of the simplified good impression level is only an example, and the present invention is not limited to these examples. Further, the condition parameter may be an index indicating the physical and/or mental condition (good, normal, bad) of one of the characters instead of indicating the good impression level with respect to another character.

Further, the value of the condition parameter may be initialized by a specific value when interpreting a certain animation description script, or the value at the end of the interpretation of the previous animation description script may be stored to be continuously used. The former makes it possible to individually interpret each animation description script in the case of a plurality of animation description scripts having no correlation of the content. The latter makes it possible to interpret each animation description script while maintaining the continuity in the case of a plurality of the animation description scripts together constituting a continuous story. Note that, the value of the condition parameter may be adjustable by the input operation of a user.

The following will explain a procedure for interpreting the first character animation description script by the script interpreting means 2008 by referring to the script interpretation table stored in the interpretation table storing means 2007 and modifying the condition parameter stored in the first character condition storing means 2005 by the character condition renewing means 2010, with reference to the example of the script interpretation table shown in Figure 22.

For example, as with the foregoing explanation with reference to Figure 21, it is assumed that the action tag of "composed" is interpreted in the first character animation description script and the action tag of "angry" in the second character animation description script is synchronized with the interpreted action tag. Here, if the good impression level of the first character stored in the first character condition storing means 2005 is +10, i.e., the good impression level is "high", the first action tag after modification 2204 will be "sleep", and the first character good impression level correction value 2205 will be -1, as they are associated with the combination of the first action tag 2201 of "composed", the second action tag 2202 of "angry", and the good impression level of "high", according to the script interpretation table shown in Figure 22.

According to the foregoing result, the script interpretation means 2008 carries out interpretation by modifying the action tag of "composed" to the action tag of "sleep", and referring to the action pattern storing means 2002 so that the action pattern associated with the action tag of "sleep" is associated with the action tag of "composed". Further, the character condition renewing means 2010 modifies the value of the first character good impression level stored in the first character condition storing means 2005 to be +9 by adding the obtained first character good impression level correction value 2205 of -1.

In another case assuming that the good impression level of the first character stored in the first character condition storing means 2005 is 0, i.e., the good impression level is "medium", the first action tag after modification 2204 will be "cry", and the first character good impression level correction value 2205 will be -2 according to the script interpretation table. Further, in the same manner as above, the character condition renewing means 2010 modifies the value of the first character good impression level to be -2 by adding the obtained first character good impression level correction value 2205 of -2.

With the foregoing method, it becomes possible to obtain a different first action tag after modification and a different first character good impression level correction value depending on the value of the first character good impression level even for the same combination of the first action tag and the second action tag.

In the foregoing example, when the first character good impression level is "high", i.e., the first character has a good impression with respect to the second character, the first character reacts with an action of "sleep" for shrugging off the action of "angry" of the second character, and when the first character good impression level is "medium", i.e., the first character has a neutral impression with respect to the second character, the action of the first character for reacting to the action of the second character of "angry" is modified to the normal action of "cry".

Further, it also is possible to modify the good impression level of the first character according to the action of the second character, as the character condition renewing means 2010 modifies the value of the first character good impression level. In the foregoing example, when the second character repeats the action lowering the good impression level, such as the action of "angry", the first character gradually becomes offended at the second character's action. As a result, even for the same combination of the first action tag and the second action tag, a different first action tag after modification can be obtained.

In the example of the script interpretation table shown in Figure 22, the good impression level as the condition parameter is referable and modifiable only with respect to the first character; however, the good impression level (condition parameter) of the second character may also be referable and/or modifiable. With this arrangement, for example, when the second character takes the action of "anger", the action pattern of the second character can be switched so that the action pattern expresses strong anger when the good impression level of the second character is high and the action pattern expresses weak anger when the good impression level of the second character is low. Further, by decreasing the good impression level of the second character with the interpretation of the action tag, the good impression level with respect to the other character (its own condition parameter) can be varied according to its own action, for example, the action of "angry" of one character decreases its good impression level with respect to the other character.

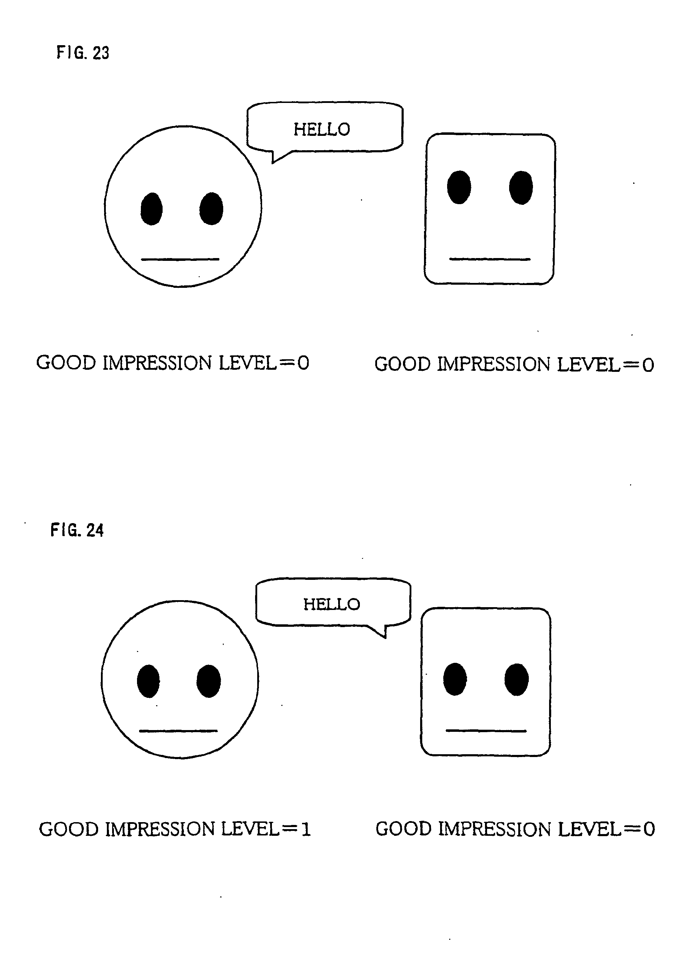

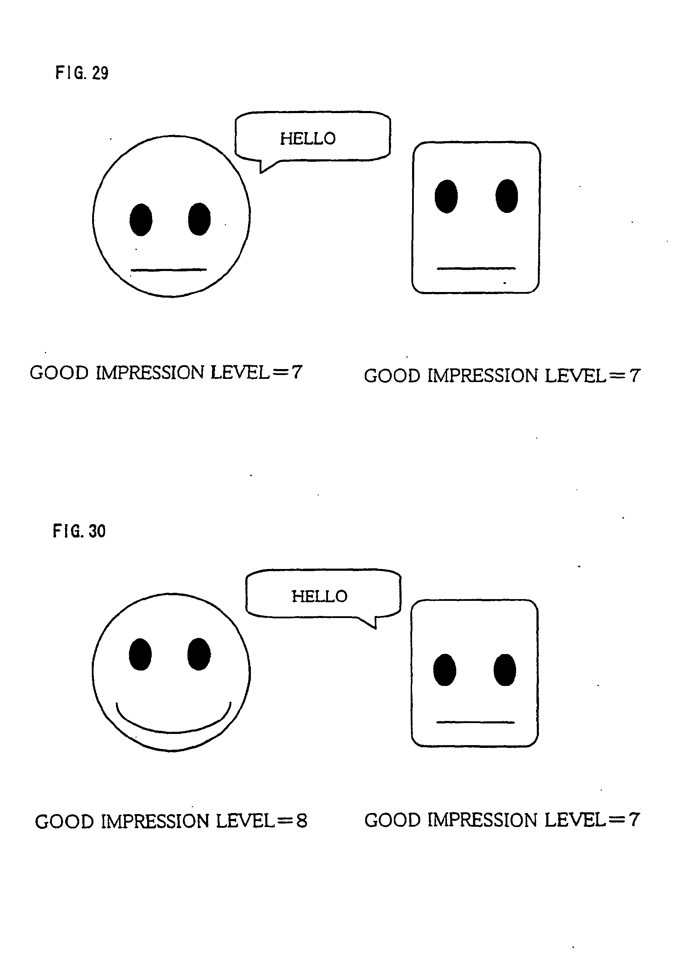

Figures 23 through 34 show an example where the script interpreting means 2008 interprets the example of the first character animation description script and the example of the second character animation description script shown in Figure 21 with reference to the example of the script interpretation table shown in Figure 22, and the animation reproducing means 2009 reproduces the scripts according to the example of the action pattern shown in Figure 4. Figures 23 through 28 show an example where the default value of the good impression levels of the first character and the second character are respectively set to be 0, and Figures 29 through 34 show an example of where the default value of the good impression levels of the first character and the second character are respectively set to be 7.

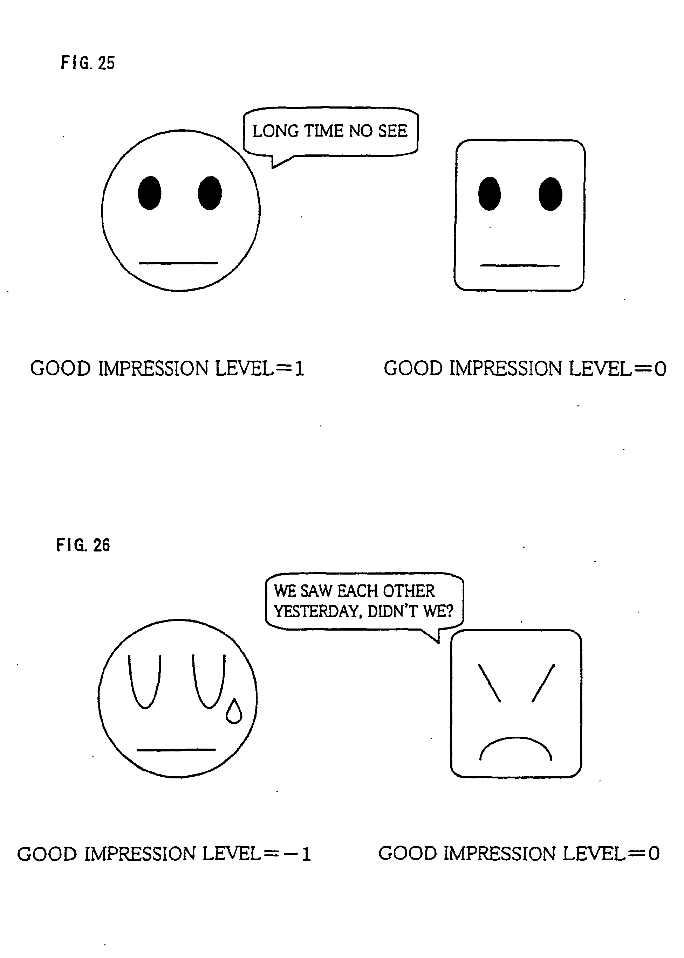

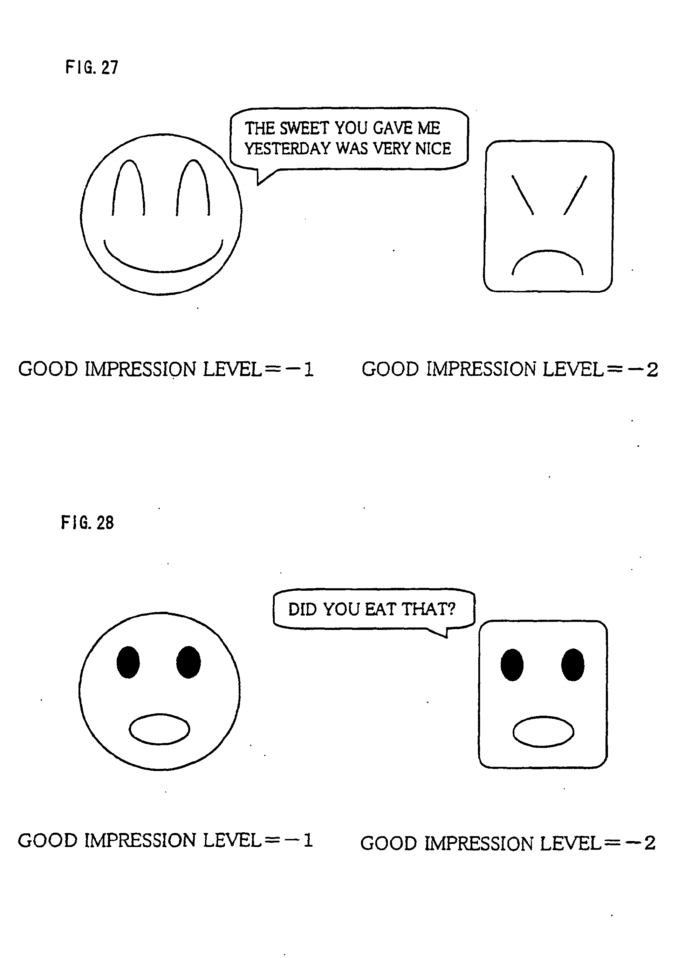

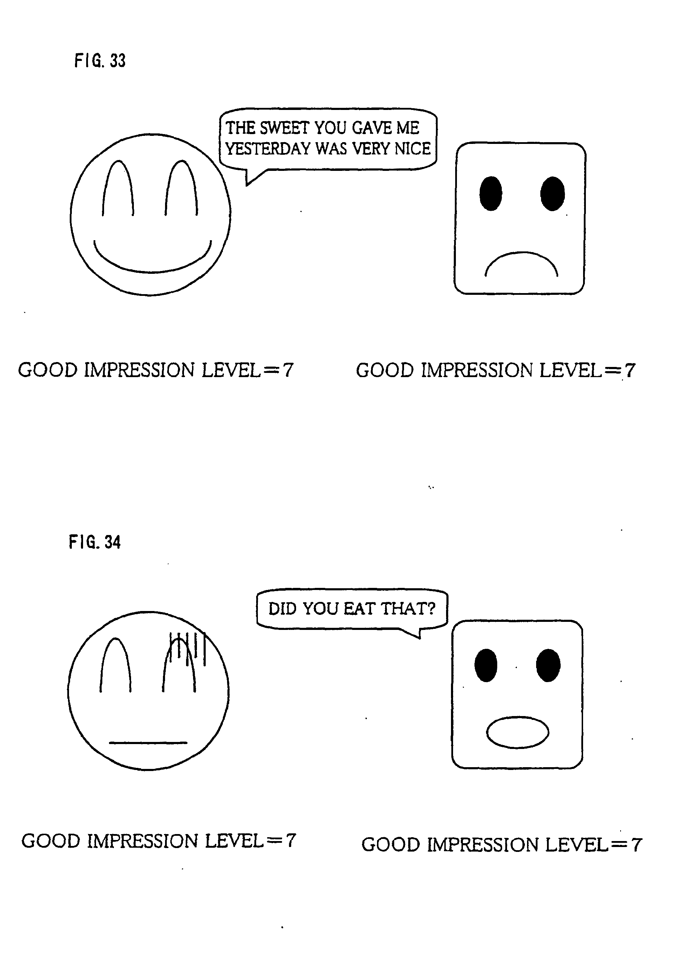

Further, the reproduction condition of the first character and the second character is 0ms after the reproduction start time in Figures 23 and 29, 2000ms after the reproduction start time in Figures 24 and 30, 4000ms after the reproduction start time in Figures 25 and 31, 6000ms after the reproduction start time in Figures 26 and 32, 8000ms after the reproduction start time in Figures 27 and 33, 11000ms after the reproduction start time in Figures 28 and 34.

In each figure, the character on the left side is the first character, and the character on the right side is the second character. Further, the value of the good impression level of the first character as the condition parameter stored in the first character condition storing means 2005 and the value of the good impression level of the second character as the condition parameter stored in the second character condition storing means 2006 are displayed below each character. Those values are not required to be displayed in an enforcement of the present invention, as it is only displayed for explanation.

Figure 23 shows a state where the script interpreting means 2008 interprets the action tag of '<greeting t="0" d="4000">' in a unit script at 0ms after the reproduction start time in the example of the first character animation description script 2101 shown in Figure 21. Since there is no unit script for the second character at 0ms after the reproduction start time, the second character has not yet been in action and is displayed in an initial state.

It also may be arranged such that the second character is not displayed at the time. Further, as to the animation reproduction operation for the first character, the first action tag can be used as the first action tag after modification since the associated second action tag does not exist at the time.

Figure 24 shows a state where the script interpreting means 2008 interprets the action tag of '<greeting t="2000" d="4000">' in a unit script at 2000ms after the reproduction start time in the example of the first character animation description script 2102 shown in Figure 21. Here, the action tag of "greeting" of the first character is associated with the first action tag 2201 and the action tag of "greeting" of the second character is associated with the second action tag 2202 according to the script interpretation table. Further, the good impression level of the first character is 0, which is "medium".

The combination of the first action tag 2201 of "greeting", the second action tag 2202 of "greeting", and the first character good impression level 2203 of "medium" is associated with the first action tag after modification 2204 of "greeting" and the first character good impression level correction value 2205 of +1 according to the example of the script interpretation table shown in Figure 22. As a result, the action pattern associated with the first action tag after modification 2204 of "greeting" is adopted as the action pattern of the first character, and the value of the first character good impression level of 0 is modified to be +1 by being added by 1.

Figure 25 shows a state where the script interpreting means 2008 interprets the action tag of '<composed t="4000" d="4000">' in a unit script at 4000ms after the reproduction start time in the example of the first character animation description script 2101 shown in Figure 21. In this state, the role is swapped in the first character and the second character, and therefore the first action tag 2201 becomes "greeting" and the second action tag 2202 becomes "composed". The script interpretation table shown in Figure 22 does not store this combination, and in such a case, the first action tag may be adopted as the first action tag after modification 2204 and the first character good impression level correction value 2205 may be 0.

Figure 26 shows a state where the script interpreting means 2008 interprets the action tag of '<angry t="6000" d="5000">' in a unit script at 6000ms after the reproduction start time in the example of the first character animation description script 2102 shown in Figure 21. Here, the first action tag 2201 is "composed", and the second action tag 2202 is "angry". Further, the good impression level of the first character is 1, which is "medium".

The combination of the first action tag 2201 of "composed", the second action tag 2202 of "angry", and the first character good impression level 2203 of "medium" is associated with the first action tag after modification 2204 of "cry" and the first character good impression level correction value 2205 of -2 according to the example of the script interpretation table shown in Figure 22. As a result, the action pattern associated with the first action tag after modification 2204 of "cry" is adopted as the action pattern of the first character, and the value of the first character good impression level of +1 is modified to be -1 by being subtracted by 2.

Figure 27 shows a state where the script interpreting means 2008 interprets the action tag of '<smile t="8000" d="5000">' in a unit script at 8000ms after the reproduction start time in the example of the first character animation description script 2101 shown in Figure 21. Here, the role is again swapped in the first character and the second character, and therefore the first action tag 2201 becomes "angry" and the second action tag 2202 becomes "smile". Further, the good impression level of the second character is 0, which is "medium".

The combination of the first action tag 2201 of "angry", the second action tag 2202 of "smile", and the first character good impression level 2203 of "medium" is associated with the first action tag after modification 2204 of "angry" and the first character good impression level correction value 2205 of -2 according to the example of the script interpretation table shown in Figure 22. As a result, the action pattern of the second character stays as "angry", but the value of the second character good impression level of 0 is modified to be -2 by being subtracted by 2.

Figure 28 shows a state where the script interpreting means 2008 interprets the action tag of '<surprised t="11000" d="2000">' in a unit script at 11000ms after the reproduction start time in the example of the first character animation description script 2102 shown in Figure 21. Here, the first action tag 2201 is "smile" and the second action tag 2202 is "surprised". Further, the good impression level of the first character is -1, which is "medium".

The combination of the first action tag 2201 of "smile", the second action tag 2202 of "surprised", and the first character good impression level 2203 of "medium" is associated with the first action tag after modification 2204 of "surprised" and the first character good impression level correction value 2205 of 0 according to the example of the script interpretation table shown in Figure 22. As a result, the action pattern associated with the first action tag after modification 2204 of "surprised" is adopted as the action pattern of the first character. The value of the first character good impression level is not modified.

Figures 29 through 34 respectively correspond to Figures 23 through 28; however, the good impression levels of the first character and the second character are "high" in all scenes since the default values of the good impression levels of the first character and the second character are set to be 7. Consequently, Figures 30, 32, 33, and 34 differ from the animation reproduction examples shown in Figures 24, 26, 27, and 28.

In Figure 30, by referring to the example of the script interpretation table shown in Figure 22 for the combination of the first action tag 2201 of "greeting", the second action tag 2202 of "greeting", and the first character good impression level 2203 of "high", the first action tag after modification 2204 of "pleased" and the first character good impression level correction value 2205 of +1 are obtained. As a result, the value of the first character good impression level becomes 8.

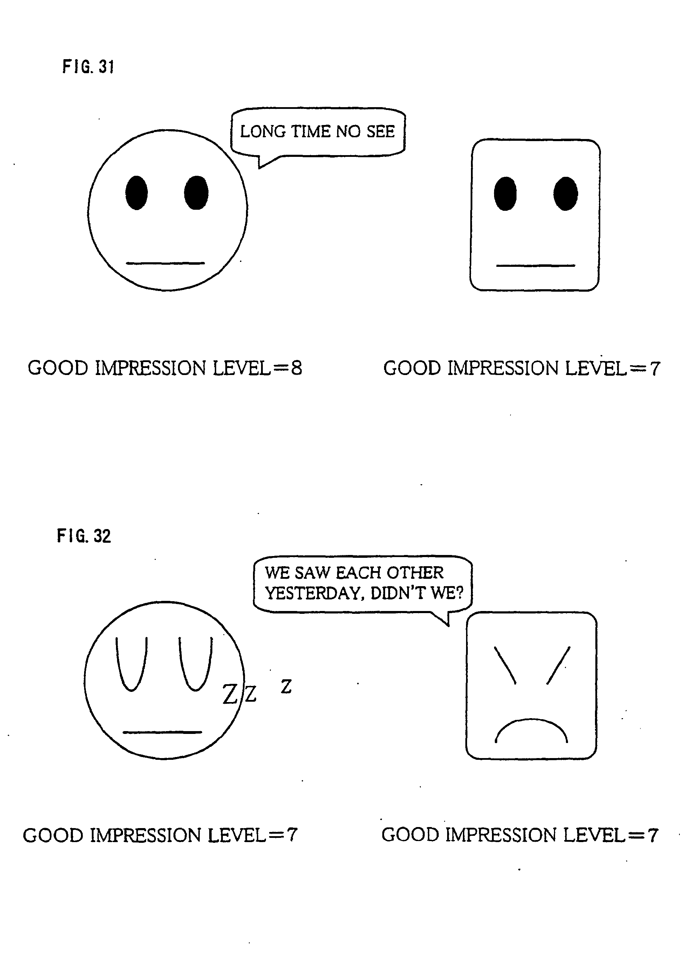

Similarly, in Figure 32, for the combination of the first action tag 2201 of "composed", the second action tag 2202 of "angry", and the first character good impression level 2203 of "high", the first action tag after modification 2204 of "sleep" and the first character good impression level correction value 2205 of -1 are obtained. As a result, the value of the first character good impression level goes back to 7.

In Figure 33, for the combination of the first action tag 2201 of "angry" as starting from the second character in this case, the second action tag 2202 of "smile", and the first character good impression level 2203 of "high", the first action tag after modification 2204 of "fed up" and the first character good impression level correction value 2205 of 0 are obtained. As a result, the value of the second character good impression level stays at 7.

In Figure 34, for the combination of the first action tag 2201 of "smile" as starting from the first character in this case, the second action tag 2202 of "surprised", and the first character good impression level 2203 of "high", the first action tag after modification 2204 of "flustered" and the first character good impression level correction value 2205 of 0 are obtained. As a result, the value of the first character good impression level stays at 7.

As thus described, by using the condition parameters of the characters, it is possible to obtain a different action pattern after modification even for the same combination of action patterns.

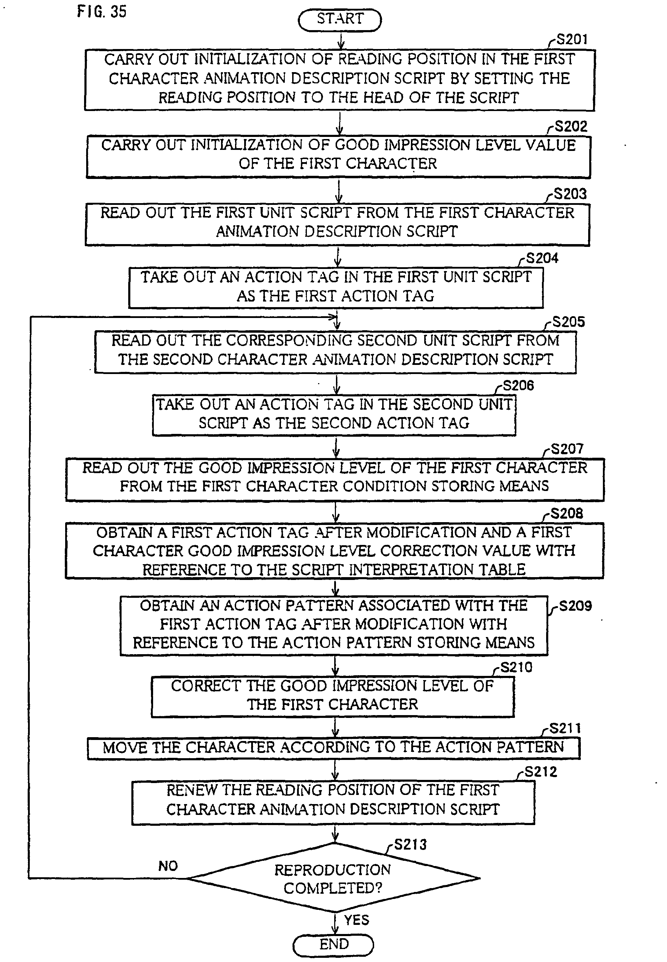

Figure 35 is a flow chart for animation reproduction by the animation reproduction device having the arrangement shown in Figure 20.

Firstly, the script interpreting means 2008 carries out initialization of the reading position for starting readout of a unit script from the animation description script of the first character stored in the first script storing means 2003 by setting the reading position to the head of the script (Step S201). Note that, the reading position is stored in the script interpreting means 2008.

Next, the good impression level of the first character stored in the first character condition storing means 2005 is initialized (step S202). The initialized level may be a specific value, or may be the value stored in advance at the end of the previous operation as described above.

Next, the script interpreting means 2008 reads out a unit script at the reading position from the first script storing means 2003, and stores the unit script as the first unit script (step S203).

Next, the script interpreting means 2008 takes out the action tag in the first unit script thus read out in the step S203, and stores the action tag as the first action tag 2201 (step S204).

Next, the script interpreting means 2008 reads out a unit script synchronized with the first unit script thus read out in the step S203 from the animation description script for the second character stored in the second script storing means 2004, and stores the unit script as the second unit script (step S205). Next, the script interpreting means 2008 takes out the action tag in the second unit script thus read out in the step S205, and stores the action tag as the second action tag 2202 (step S206).

Next, the script interpreting means 2008 reads out the good impression level of the first character stored in the first character condition storing means 2005, and stores the good impression level as the first character good impression level 2203 (step S207).

Next, the script interpreting means 2008 obtains the first action tag after modification 2204 and the first character good impression level correction value 2205 associated with the combination of the first action tag 2201 taken out in the step S204, the second action tag 2202 taken out in the step S206, and the first character good impression level 2203 read out in the step S207 with reference to the script interpretation table stored in the interpretation table storing means 2007 (step S208). The concrete example has been described above.

Next, the script interpreting means 2008 obtains an action pattern associated with the first action tag after modification 2204 thus obtained in the step S208 with reference to the action pattern storing means 2002 (step S209).

Next, the character condition renewing means 2010 modifies the good impression level of the first character stored in the first character condition storing means 2005 by using the first character good impression level correction value 2205 obtained in the step S208 (step S210).

Next, the animation reproducing means 2009 moves the first character according to the action pattern obtained in the step S209 (S211).

Next, the script interpreting means 2008 moves the reading position stored therein for reading out a unit script from the first script storing means 2203 to the next unit script (step S212). In the case where the next unit script does not exist, the script interpreting means 2008 sets a value EOF in the reading position so as to indicate that the reading position reaches to the end of the first character animation description script stored in the first script storing means 2003.

Next, the script interpreting means 2008 judges whether or not the value EOF is set in the reading position thus moved in the step S212, i.e., the readout of the first character animation description script stored in the first script storing means 2003 is completed (step S213). When the value EOF is set, the script interpreting means 2008 finishes the reproduction operation. Otherwise, the script interpreting means 2008 carries on the operation back from the step S203.

The operation thus explained with the flow chart in Figure 35 is carried out with respect to the first character; however, the same operation can be carried out simultaneously with respect to the second character, thereby simultaneously reproducing animation having a plurality of characters. Further, as another method for simultaneously reproducing animation having a plurality of characters, the script interpreting means 2008 may carry out the reproduction operation by moving the reading position between a plurality of animation description scripts so as to sequentially read out and process the plurality of animation description scripts.

As described, in the present invention, when an action tag included in the first character animation description script is associated with the action pattern (interpreted), the associated action pattern is modified by referring to the second character animation description script and the condition parameter of the first character. Thus, it is possible to associate the action of the first character with the action of the second character at reproduction without changing the first character animation description script stored in the first script storing means 2003. Besides, since the associated action pattern is modified according to the value of the condition parameter, and the value of the condition parameter is also modified, it is possible to vary the action of the first character according to the circumstance.

### [THIRD EMBODIMENT]

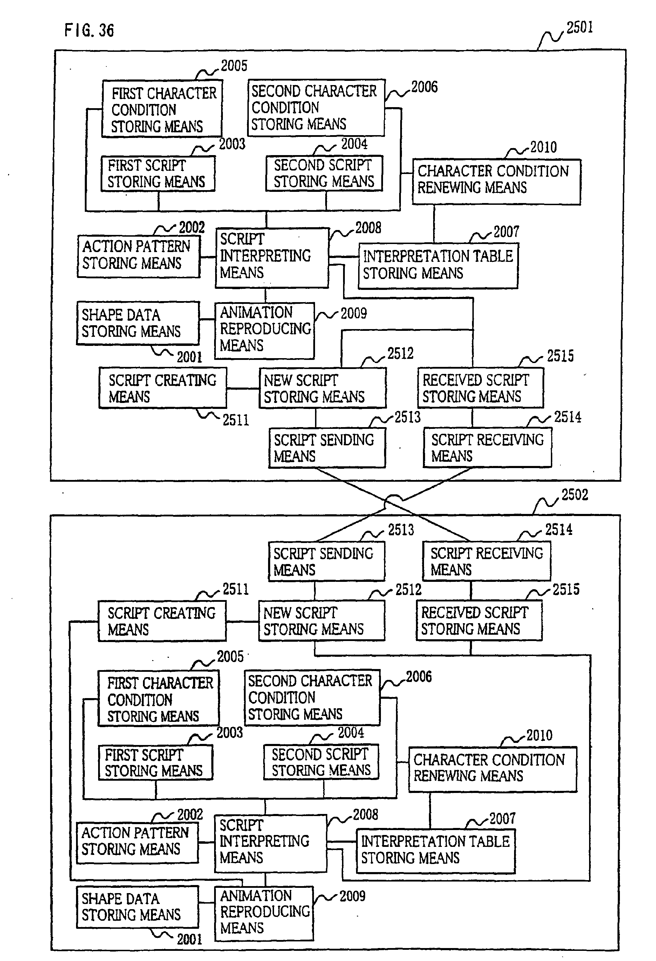

The following will explain still another embodiment according to an animation reproduction system of the present invention with reference to Figures 36 through 38. The present embodiment explains a concrete example for realizing the animation reproduction method explained in Second Embodiment by using a portable terminal device such as a mobile phone so as to carry out communication such as e-mail using animation between the portable terminal devices.

Figure 36 is a block diagram showing an arrangement of an animation reproduction system according to Third Embodiment of the present invention.

In Figure 36, 2501 is a first animation reproduction device, and 2502 is a second animation reproduction device. These devices are realized as, for example, a portable terminal device such as a mobile phone partially including an animation reproduction device of the present invention in its configuration.

As with the arrangement shown in Figure 20 explained in Second Embodiment, the first animation reproduction device 2501 and the second animation reproduction device 2502 respectively include shape data storing means 2001, action pattern storing means 2002, first script storing means 2003, second script storing means 2004, first character condition storing means 2005, second character condition storing means 2006, interpretation table storing means 2007, script interpreting means 2008, animation reproducing means 2009, and character condition renewing means 2010.

Further, the first animation reproduction device 2501 and the second animation reproduction device 2502 respectively include script creating means 2511 for allowing the users of the devices 2501 and 2502 to create a new animation description script of its own character (a first character) and/or, when one of the devices 2501 and 2502 receives an animation of another character (a second character) from the other terminal and then sends back an animation of the first character to the other terminal, to create a response animation description script while reproducing the second character by the animation reproduction means 2009, new script storing means 2512 for storing the animation description script created by the script creating means 2511, script sending means 2513 for sending the animation description script stored in the new script storing means 2512 from one to another between the devices 2501 and 2502 by using wired means or radio means etc., script receiving means 2514 for receiving the animation description script sent from one to another between the devices 2501 and 2502 by wired means or radio means etc., and received script storing means 2515 for storing the animation description script received by the script receiving means 2514.

Note that, the new script storing means 2512 and the received script storing means 2515 are respectively connected to the script interpreting means 2008 so that the animation description script of the first character stored in the new script storing means 2512 is interpreted by referring to the animation description script of the second character stored in the received script storing means 2515.

Further, the new script storing means 2512 stores the animation description script of the first character as with the first script storing means 2003, and therefore the new script storing means 2512 and the first script storing means 2003 can be provided as one storing means. Meanwhile, the received script storing means 2515 stores the animation description script of the second character as with the second script storing means 2004, and therefore the received script storing means 2515 and the second script storing means 2004 can be provided as one storing means.

Further, the new script storing means 2512, the first script storing means 2003, the received script storing means 2515, and the second script storing means 2004 can be provided as one storing means all together.

The script sending means 2513 and the script receiving means 2514 may be provided either as one communicating means or as separate communicating means.

Further, as with a general e-mail application, by respectively keeping the animation description scripts of the first character, which are stored in the new script storing means 2512 and sent by the script sending means 2513, as a group of sent scripts, and the animation description scripts of the second character, which are received by the script receiving means 2514 and stored in the received script storing means 2515, as a group of received scripts, it is possible to refer to the history of the received scripts when creating a new animation description script of the first character, or refer to the history of the sent scripts. so as to carry out reproduction of a new received script synchronized with the sent script in the past.

In this arrangement, the animation description scripts kept as the sent scripts or as the received scripts may be used by appropriately being transferred to the first script storing means 2003 for the first character, to the second script storing means 2004 for the second character, as required.

The connection between the script sending means 2513 of the first animation reproduction device 2501 and the script receiving means 2514 of the second animation reproduction device 2502, and the connection between the script receiving means 2514 of the first animation reproduction device 2501 and the script sending means 2513 of the second animation reproduction device 2502 may be either a direct connection or a connection via one or plurality of intermediary stations as with e-mail using the Internet.

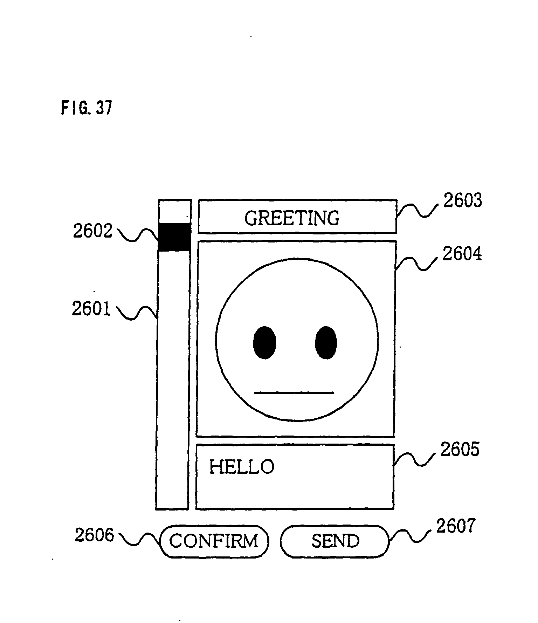

Figure 37 shows a concrete example of a display creating the animation description script by using the script creating means 2511. This display example of script creating means shows the case of creating a new message using animation without referring to other animation description scripts. This is the same manner as creating a new e-mail.

In Figure 37, 2601 is a scroll bar for indicating the time, 2602 is a knob for specifying the time of the screen now subjected to creation in the duration shown with the scroll bar 2601, 2603 is an action pattern menu for selecting the action pattern stored in the action pattern storing means 2002, 2604 is a character display area for displaying a basic element of the character's action associated with the expression method of the action pattern selected in the action pattern menu 2603, 2605 is a character string input area for inputting a character string, 2606 is a confirmation button for confirming the animation reproduced according to the created animation description script, and 2607 is a sending button for sending the created animation description script.

In the figure, the action pattern menu 2603 displays the action tag expressing "greeting" as one of the action patterns, and the character string input area 2605 displays the character string of "Hello" as an example of the inputted character string; however, these displays are only examples and the present invention is not limited to the examples.

The following will explain a procedure example for creating a message using animation by using the example of the script creating means 2511 shown in Figure 37. For example, it is assumed that the user of the first animation reproduction device 2501 creates a message. The user switches the action tag expressing the action pattern displayed in the action pattern menu 2603 by using input means such as an operation key. Since the character display area 2604 displays the character's action associated with the expression method of the action pattern displayed in the action pattern menu 2603, the user can select a desired action pattern by looking at the character display area 2604.

Next, after selecting a desired action pattern, the user inputs a character string in the character string input area 2605. Then, the user operates the knob 2602 by moving it downward and shifts the knob 2602 to a desired position in the slider 2601 so as to decide the duration of the action pattern selected in the action pattern menu 2603.

When creation of a series of messages is completed by repeating the foregoing operation, the user presses the confirming button 2606 so as to confirm the created series of messages by displaying it in the character display area 2604. When the user presses the sending button 2607 for sending the created messages after confirmation, the animation description script corresponding to the created messages is created and is stored in the new script storing means 2512, and then is sent by the script sending means 2513.

For a concrete example of this procedure, when the knob 2602 is at the position indicating the time of 0ms, by selecting the action pattern of "greeting" in the action pattern menu 2603, and inputting "Hello" in the character string input area 2605, then moving the knob 2602 to the position indicating the time of 4000ms, a unit script made up of the action tag of '<greeting t="0" d="4000">' of which start time is 0ms and the duration is 4000ms, the conversation line of "Hello", and the end tag of '</greeting>', which corresponds to the action tag, is created.

Further, when the message is created by selecting the action pattern of "composed" in the action pattern menu 2603, and inputting "Long time no see" in the character string input area 2605, then moving the knob 2602 to the position indicating the time of 8000ms, and then, further selecting the action pattern of "smile" in the action pattern menu 2603, and inputting "The sweet you gave me yesterday was very nice" in the character string input area 2605, then moving the knob 2602 to the position indicating the time of 13000ms, the created message by this series of inputting can be expressed as the first character animation description script 2101 shown in Figure 21.

However, it should be noted that the procedure of creating a message is not limited to the foregoing example. For example, the character string may be inputted before the action pattern is selected. Further, the animation description script may be created each time the knob 2602 is operated, or may be created when the sending button 2607 is pressed.

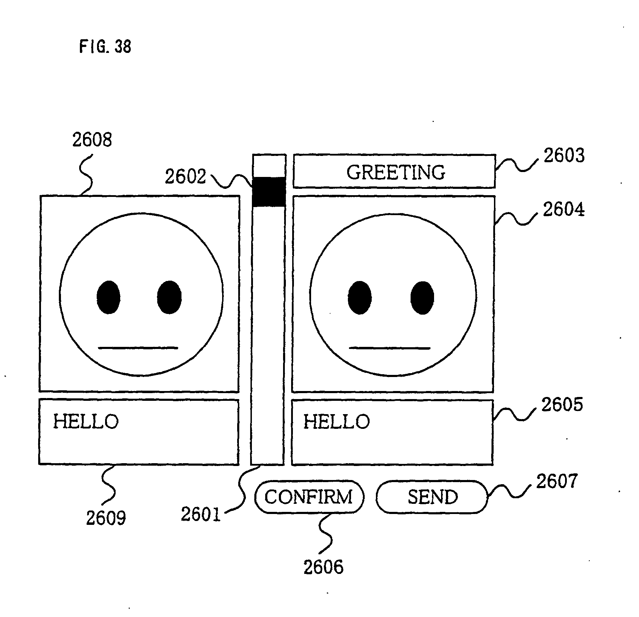

Figure 38 shows a concrete example of a screen creating the animation description script with reference to the received animation description script by using the script creating means 2511. This is the same manner as creating a response e-mail with respect to e-mail which has been received.

The scroll bar 2601, the knob 2602, the action pattern menu 2603, the character display area 2604, the character- string input area 2605, the confirming button 2606, and the sending button 2607 are all the same as those explained in Figure 37.

Further, 2608 is a received character display area for displaying animation of the second character reproduced according to the received animation description script, and 2609 is a character string display area for displaying the conversation line included in the received animation description script. These areas both display a reproduction scene corresponding to the time shown in the knob 2602.

For example, it is assumed that the animation description script of the first character sent from the first animation reproduction device 2501 is received in the second animation reproduction device 2502 through the manner explained in Figure 37. The received animation description script is stored in the received script storing means 2515, and the script creating means 2511 of Figure 38 displays animation in the received character display area 2608 and the character string display area 2609 by referring to the stored animation description script.

In order to create a response with respect to this animation description script, the user of the second animation reproduction device 2502 operates the knob 2602 to specify an arbitrary time, and creates a message with the same operation as that explained in Figure 37. In this manner, a response animation of the first character can be created while being synchronized with an arbitrary action tag included in the received second character animation description script.

For a concrete example of this procedure, the user moves the knob 2602 to the position indicating the time of 2000ms, and confirms the content of the received message displayed in the received character display area 2608 and the character string display area 2609. Then, in order to create the response, the user selects the action pattern of "greeting" in the action pattern menu 2603, inputs "Hello" in the character string input area 2605, then moves the knob 2602 to the position indicating the time of 6000ms, selects the action pattern of "angry" in the action pattern menu 2603, inputs "We saw each other yesterday, didn't we?" in the character string input area 2605, then moves the knob 2602 to the position indicating the time of 11000ms, and then, further selects the action pattern of "surprised" in the action pattern menu 2603, inputs "Did you eat that?" in the character string input area 2605, then moves the knob 2602 to the position indicating the time of 13000ms. The animation description script corresponding to the message created by this series of inputting is shown in Figure 21 as the second character animation description script 2102.

When the user of the second animation reproduction device 2502 presses the sending button 2607 after the foregoing operation, the animation description script corresponding to the created message is created and is stored in the new script storing means 2512, then is sent by the script sending means 2513. The sent animation description script is received by the script receiving means 2514 of the first animation reproduction device 2501.

The first animation reproduction device 2501 transfers the first character animation description script, created with the operation explained in Figure 37 and stored in the new script storing means 2512, to the first script storing means 2003, and transfers the second character animation description script, received from the second animation reproduction device 2502 and stored in the received script storing means 2515, to the second script storing means 2004, then reproduces those animations in the same manner as that explained in Second Embodiment. The explanation of the concrete reproduction example is omitted here since it will be the same as that has been already described.

As described, in the case where the first animation reproduction device simultaneously reproduces the animation description script sent to the second animation reproduction device and the animation description script sent back from the second animation reproduction device as the response, when the second animation reproduction device sends the second character animation description script to the first animation reproduction device as the response to the first character animation description script sent from the first animation reproduction device, the first animation reproduction device can reproduce the animation description script sent from the first animation reproduction device by synchronizing it with the animation description script sent back as the response without modifying the first sent animation description script. Thus, natural communication using a series of animation can be realized between the first animation reproduction device and the second animation reproduction device.

As described, the animation reproduction device according to the present invention is further characterized by including action pattern storing means for storing action information of the characters as action patterns, character condition storing means for storing a condition parameter indicating the condition of the characters, script storing means for storing an animation description script describing a combination and/or sequence of action tags for specifying the action patterns, interpretation table storing means for storing a script interpretation table having a combination of the action tags and the condition parameter associated with the action patterns and correction value of the condition parameter, script interpreting means for interpreting the animation description script by referring to the script interpretation table stored in the interpretation table storing means so as to associate the animation description script with the action patterns, animation reproducing means for moving the character according to the action patterns associated with the animation description script by the script interpreting means, and character condition renewing means for interpreting the animation description script by referring to the script interpretation table stored in the interpretation storing means and renewing the condition parameter, wherein an arbitrary action tag included in the animation description script of the second character is described to synchronize with an arbitrary action tag included in the animation description script of the first character, and the script interpreting means interprets an action tag included in the animation description script of the first character by referring to the synchronized action tag included in the animation description script of the second character.

With the foregoing arrangement, when the script interpreting means interprets the action tag included in the animation description script of the first character stored in the script storing means, the script interpreting means refers to the action tag synchronized with the action tag of the first character, which is included in the animation description script of the second character stored in the script storing means, and then further refers to the condition parameter of the first character and/or the condition parameter of the second character stored in the character condition storing means so as to decide the action pattern associated with the combination of the action tag of the first character, the action tag of the second character, and the condition parameter of the first character and/or the condition parameter of the second character with reference to the script interpretation table stored in the interpretation table storing means.

Further, when the script interpreting means interprets the action tag included in the animation description script of the first character, the character condition renewing means renews the condition parameter of the first character and/or the condition parameter of the second character by referring to the script interpretation table stored in the interpretation table storing means, and the animation reproducing means reproduces animation according to the action of the character expressed by the decided action pattern stored in the action pattern storing means.

Thus, the action of the first character is decided with reference to action of the associated second character, and the condition parameter of the first character and/or the condition parameter of the second character.

On this account, by creating and adding the animation of the second character to the existing animation of the first character so that the animation of the second character is synchronized with an arbitrary part of the first animation, the animation of the first character is modified by the interpretation of the animation description script without modifying the animation description script of the first character. As a result, the animation of the first character and the animation of the second character are associated with each other so as to be reproduced with natural movement. Further, by referring and renewing the condition parameter of the first character and/or the condition parameter of the second character, it is possible to reproduce these characters with natural and meticulous movement by using not only apparent expression by an action but also condition parameter indicating such as psychology of the character.

Note that, the action tag of the first character and the action tag of the second character may be synchronized with each other by description of information of the time for reproducing the animation.

With this arrangement, since the action tag of the first character and the action tag of the second character are synchronized with each other by the information of the time for reproducing the animation, more precise association can be realized in the reproduction of these first and second animations.

Further, the action tag of the first character and the action tag of the second character may be synchronized with each other by specifying an arbitrary description included in the animation description script of the first character.

With this arrangement, by specifying an arbitrary description included in the animation description script of the first character, it becomes possible to synchronize the action tag of the second character with the action tag regarding the arbitrary description, thus realizing more precise association in the reproduction of the first and second animations.

Note that, the arbitrary description included in the animation description script can be an arbitrary action tag included in the animation description script or an arbitrary conversation line, otherwise, the number, the symbol or the name of the script for discriminating a unit script which is the unit constituting the animation description script. The arbitrary description may be selected singly or as a combination from those factors.

Further, the animation reproduction device according to the present invention may be arranged such that 'the animation description script is made up of one or more unit script as a breakpoint of interpretation performed by the script interpreting means, and the first character and the second character are synchronized with each other by specifying an arbitrary description included in the animation description script of the first character'.

As described, the animation reproduction device according to the present invention is still further characterized by including action pattern storing means for storing action information of the characters as action patterns, script storing means for storing an animation description script describing a combination and/or sequence of action tags for specifying the action patterns, interpretation table storing means for storing a script interpretation table for associating a combination of an action tag of the first character and an action tag of the second character with an action tag after conversion, and associating the action tag after conversion with the action patterns, script interpreting means for interpreting the animation description script by referring to the script interpretation table stored in the interpretation table storing means so as to associate the action tags after modification with the action patterns when the animation description script of the second character includes an arbitrary action tag described to synchronize with an arbitrary action tag in the animation description script of the first character, and animation reproducing means for moving the character according to the animation description script or the action patterns associated with the animation description script by the script interpreting means.

With the foregoing arrangement, when the script interpreting means interprets the action tag included in the animation description script of the first character stored in the script storing means, the script interpreting means refers to the script interpretation table stored in the interpretation table storing means so as to decide the action tag after conversion associated with the combination of the action tag of the first character and the action tag of the second character, and further decides the action pattern of the first character associated with the action tag after conversion when the animation description script of the second character includes an arbitrary action tag described to synchronize with an arbitrary action tag in the animation description script of the first character.

With this arrangement, the script interpreting means associates the animation description script of the first character with the action pattern stored in the action pattern storing means. Further, since the animation reproducing means reproduces animation according to the action of the character expressed by the decided action pattern, it is possible to decide the action of the first character with reference to the action of the second character.

On this account, by creating and adding the animation of the second character to the existing animation of the first character so that the animation of the second character is synchronized with an arbitrary part of the first animation, the animation of the first character is modified by the interpretation of the animation description script without modifying the animation description script of the first character. As a result, the animation of the first character and the animation of the second character are associated with each other so as to be reproduced with natural movement.

As described, the animation reproduction system according to the present invention includes a first animation reproduction device including a first arrangement having action pattern storing means for storing action information of characters as action patterns, script storing means for storing an animation description script describing a combination and/or sequence of action tags for specifying the action patterns, interpretation table storing means for storing a script interpretation table for associating the action tags with the action patterns, script interpreting means for interpreting the animation description script by referring to the script interpretation table stored in the interpretation table storing means so as to associate the animation description script with the action patterns, animation reproducing means for moving the characters according to the action patterns associated with the animation description script by the script interpreting means, first script creating means for creating the animation description script, and communicating means; and a second animation reproduction device including a second arrangement having the same configuration as that of the first arrangement, second script creating means for creating the animation description script, and communicating means, wherein, when the animation description script of the first character created by the first script creating means is sent from the first animation reproduction device to the second animation reproduction device via the communicating means, the second script creating means creates the animation description script of the second character so that an arbitrary action tag included in the animation description script of the second character is synchronized with an arbitrary action tag in the animation description script of the first character; and when the animation description script of the second character is sent back from the second animation reproduction device to the first animation reproduction device via the communicating means, the script interpreting means of the first animation reproduction device interprets an action tag included in the animation description script of the first character by referring to the synchronized action tag included in the animation description script of the second character.

With this arrangement, the second script creating means creates the animation description script of the second character so that an arbitrary action tag included in the animation description script of the second character is synchronized with an arbitrary action tag in the animation description script of the first character. Further, when the script interpreting means of the first animation reproduction device interprets the action tag included in the animation description script of the first character stored in the script storing means, the script interpreting means refers to the synchronized action tag included in the animation description script of the second character and then further refers to the script interpretation table stored in the interpretation table storing means so as to decide the action pattern associated with the combination of the action tag of the first character and the action tag of the second character.

With this arrangement, the script interpreting means of the first animation reproduction device associates the animation description script of the first character with the action patterns stored in the action pattern storing means. Further, since the animation reproducing means of the first animation reproduction device reproduces animation according to the action of the characters expressed by the decided action patterns, it is possible to decide the action of the first character with reference to the action of the second character.

On this account, The animation of the first character created in the first animation reproduction device is reproduced with natural movement associated with the animation of the second character created in the second animation reproduction device without modification of the animation description script of the first character. Thus, natural communication using a series of animation can be realized between the first animation reproduction device and the second animation reproduction device.

As described, the animation reproduction method according to the present invention is characterized by including a script interpreting step for associating action patterns with animation description script describing a combination and/or sequence of action tags for specifying the action patterns, which is action information of the characters, and an animation reproducing step for moving the characters according to the action patterns associated with the animation description script in the script interpreting step, wherein an arbitrary action tag included in the animation description script of the second character is described to synchronize with an arbitrary action tag included in the animation description script of the first character, and the script interpreting step is carried out by interpreting an action tag included in the animation description script of the first character by referring to the synchronized action tag included in the animation description script of the second character.

With this arrangement, when the action tag included in the animation description script of the first character is interpreted in the script interpreting step, the action tag which is synchronized with the action tag of the first character and included in the animation description script of the second character is referred so as to decide the action pattern of the first character associated with the combination of the action tag of the first character and the action tag of the second character.

In this manner, the animation description script of the first character is associated with the action patterns. Further, in the animation reproducing step, since the animation reproduction is carried out according to the action of the characters expressed by the decided action patterns, the action of the first character is decided with reference to action of the associated second character.

On this account, by creating and adding the animation of the second character to the existing animation of the first character so that the animation of the second character is synchronized with an arbitrary part of the first animation, the animation of the first character is modified by the interpretation of the animation description script without modifying the animation description script of the first character. As a result, the animation of the first character and the animation of the second character are associated with each other so as to be reproduced with natural movement.

A storage medium readable by a computer having the animation reproduction program according to the present invention is characterized by including a program for carrying out the animation reproduction method.

With this arrangement, the animation reproduction method can be realized by a general computer.

### [FOURTH EMBODIMENT]

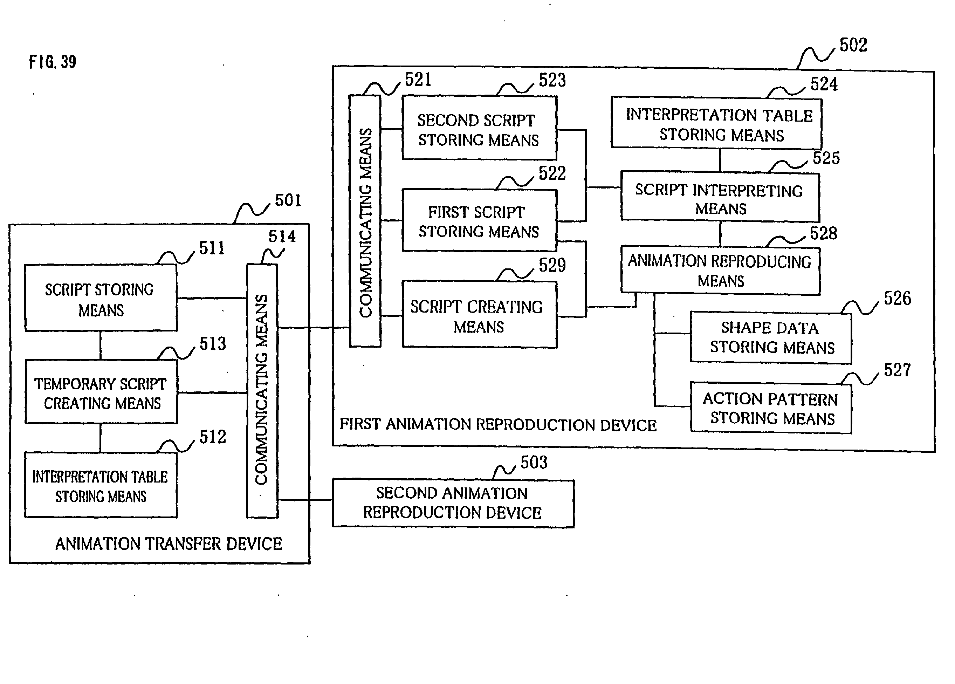

The following will explain yet another embodiment of the present invention with reference to Figures 39 through 45.

Figure 39 is a block diagram showing an arrangement of an animation reproduction system made up of the animation transfer device and the animation reproduction device according to one embodiment of the present invention.

In Figure 39, 501 is an animation transfer device connected to an animation reproduction device for sending/receiving data for animation reproduction, i.e., an animation description script describing a combination or sequence of action tags for specifying an action pattern, which is prepared information of basic action factors of the character, 502 is a first animation reproduction device connected to the animation transfer device 501 for reproducing animation according to the animation description script, 503 is a second animation reproduction device having the same arrangement and function as those of the first animation reproduction device 502.

Note that, as described later in detail, the first and second animation reproduction devices 502 and 503 also have a function for creating the animation description script. For ease of explanation, hereinafter, a character of the animation description script created by the first animation reproduction device 502 is referred to as a first character, and a character of the animation description script created by the second animation reproduction device 503 is referred to as a second character.

Figure 39 shows an arrangement made up of one animation transfer device and two animation reproduction devices; however, the present invention is not limited to this arrangement in the number of those devices.

The animation transfer device 501 includes script storing means 511 for storing the animation description script of the first character received from the first animation reproduction device 502 and the animation description script of the second character received from the second animation reproduction device 503, conversion table storing means 512 for storing a script conversion table, which associates an action tag after modification with a combination of the action tag of the first character and the action tag of the second character, temporary script creating means 513 for creating a temporary animation description script of the first character by referring to the script conversion table stored in the conversion table storing means 512, when the animation description script of the second character received from the second animation reproduction device 503 by the communicating means 514 includes an arbitrary action tag described to synchronize (to be associated) with an arbitrary tag in the animation description script of the first character stored in the script storing means 511, and communicating means 514 connected to the first and second animation reproduction devices 502 and 503 for sending/receiving the animation description script.

Note that, for all users who operate the first and second animation reproduction devices 502 and 503 for communication, the character of the animation description script created by operation of one party will be hereinafter referred to as "one's own character", and the character of the animation description script created by operation of the other party of communication will be referred to as "other party's character".

Next, the first animation reproduction device and the second animation description device both include communicating means 521 connected to the animation transfer device 501 for sending /receiving the animation description script, first script storing means 522 for storing the temporary animation description script of one's own character received from the animation transfer device 501 by the communicating means 521, second script storing means 523 for storing the animation description script of other party's character received from the animation transfer device 501 by the communicating means 521, interpretation table storing means 524 for storing a script interpretation table for associating the action tags with action patterns, script interpreting means 525 for interpreting the animation description scripts stored in the first and second script storing means 522 and 523 and associating the scripts with the action patterns by referring to the script interpretation table stored in the interpretation table storing means 524, shape data storing means 526 for storing shape data expressed by a two-dimensional figure or a three-dimensional shape, which is a whole character or a component for making up the character, action pattern storing means 527 for storing the action patterns, which are prepared information of basic action factors of the character, animation reproducing means 528 for reading out the action patterns decided by the script interpreting means 525 from the action pattern storing means 527 and changing the shape data stored in the shape data storing means 526 by changing the combination of the parts making up the first character or a display parameter such as display position or display angle of the whole first character or parts making up the first character according to the content of the action pattern so as to move the first character for animation reproduction, script creating means 529 for allowing the users to create a new animation description script of one's own character, which is synchronized with an arbitrary action tag in the animation description script of the other party's character received from the animation transfer device 501 and stored in the second script storing means 523.

Note that, the first script storing means 522 may also store a new animation description script created by the script creating means 529. Further, the first animation reproduction device 502 and the second animation reproduction device 503 can directly send/receive the animation description script to/from each other via each communicating means 521. More specifically, the animation description script may be sent to the animation transfer device 501 and then sent back via the animation transfer device 501 after directly being sent/received between the first animation reproduction device 502 and the second animation reproduction device 503 for several times.

The first script storing means 522 and the second script storing means 523 may be provided either as one storing means or as separate storing means. Further, these storing means may adopt a stationary storage device such as a hard disk or a temporary storage device such as a memory for its storing function.

The interpretation table stored in the interpretation table storing means 524, the shape data stored in the shape data storing means 526, and the action patterns stored in the action pattern storing means 527 are stored in an external storage device such as a ROM (Read Only Memory), a floppy disk®, or a CD-ROM. Further, by partly or entirely transferring and storing these data via a network, it is possible to update information for reproducing animation.

The animation transfer device and the animation reproduction device are connected to each other via a network using a phone line, radio transmission, or the Internet etc. These devices are not required to be connected to each other all the time, and may appropriately be connected for sending /receiving data of such as the animation description script. Further, the described configurations in those devices 501, 502 and 503 are not necessarily directly connected to each other, and the present invention also includes an arrangement in which those configurations are partly connected via a network using a phone line, radio transmission, or the Internet etc.

An example of the shape data stored in the shape data storing means 526 has been explained above with reference to Figure 2.

Further, an example of the action pattern stored in the action pattern storing means 527 has also been explained above with reference to Figure 4.

Further, the operation of the animation reproducing means 528 is the same as that of the animation reproducing means 107 which has been explained above with reference to Figures 3, 5, and 6.

Further, the animation reproduction operation by reading an example of the animation description script shown in Figure 7 stored in the first or second script storing means 522, or 523 for each of the unit script by the script interpreting means, deciding the action pattern specified by the action tag 401, and renewing the display of the character according to the action pattern by the animation reproducing means 528 is the same as the operation by the script interpreting means 106 and the animation reproducing means 107 which has been explained above with reference to Figures 8 through 10.

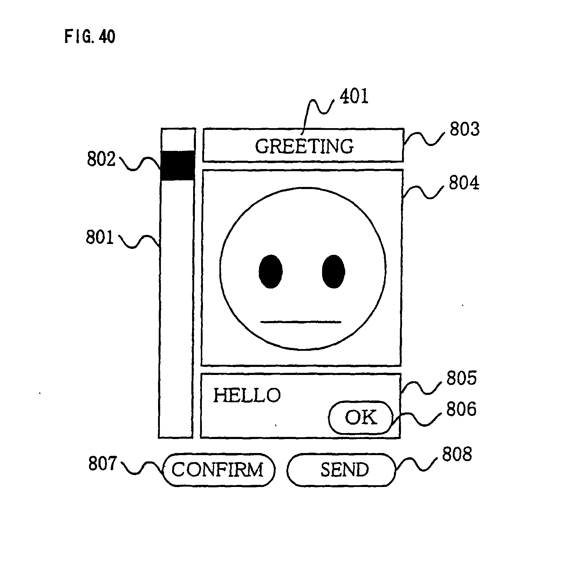

Figure 40 shows a concrete example of a screen creating the animation description script by using the script creating means 529. This screen example of script creation by the script creating means 529 shows the case of creating a new message using animation without referring to other animation description scripts. This is the same manner as creating a new e-mail. The destination for sending the created animation description script can be specified by respectively specifying an address as with the manner for sending e-mail.

In Figure 40, 801 is a scroll bar for indicating the whole time of animation reproduction, 802 is a knob for specifying the time of the scene now subjected to creation during the time indicated with the scroll bar 801, 803 is an action pattern menu for selecting the action pattern stored in the action pattern storing means 527, 804 is a character display area for displaying a basic element of the character's action corresponding to the expression method of the action patterns selected in the action pattern menu 803, 805 is a character string input area for inputting a character string, 806 is an OK button for determining the combination of the action pattern selected in the action pattern menu 803 and the character string inputted in the character string input area 805 and adding the combination to the animation description script now subjected to creation, 807 is a confirmation button for confirming the animation reproduced according to the created animation description script with a display shown in the character display area 804, and 808 is a sending button for sending the created animation description script via the communicating means 521.

In the figure, the action pattern menu 803 displays the action tag expressing "greeting" as one of the action patterns, and the character string input area 805 displays the character string of "Hello" as an example of the inputted character string; however, these displays are only examples and the present invention is not limited to the examples.

The following will explain a procedure example for creating a message using animation by using the example of the script creating means 529 shown in Figure 40.

For example, it is assumed that the user of the first animation reproduction device 502 creates a message. The user switches the action tags specifying the action patterns displayed in the action pattern menu 803 by using input means such as an operation key. With this operation, the animation reproducing means 528 carries out search in the action pattern storing means 527 and makes a combination of the shape data stored in the shape data storing means 526 according to the expression method 402 corresponding to the specified action tag 401. As a result, the character display area 804 displays the character's action corresponding to the expression method of the action pattern displayed in the action pattern menu 803. Thus, the user can select a desired action pattern by looking at the character display area 804.

Next, after selecting a desired action pattern, the user inputs a character string in the character string input area 805. Then, when the user presses the OK button 806, the knob 802 moves downward in the slider 801 by the duration of the action pattern selected in the action pattern menu 803, and then becomes ready for the next input of the action pattern. Note that, the duration of the action pattern may be previously set for each action pattern to be stored in the action pattern storing means 527.

When creation of a series of messages is completed by repeating the foregoing operation, the user presses the confirming button 807. With this operation, the animation reproducing means 528 reproduces a series of animation made up of the action patterns corresponding to the created message, which allows the user to confirm the content of the message. When the user presses the sending button 808 for sending the created message after confirmation, the animation description script corresponding to the created message is created and is sent to the animation transfer device 501 by the communicating means 521.

For a concrete example of this procedure, the operation is carried out by selecting the action pattern of "greeting" in the action pattern menu 803, and inputting "Hello" in the character string input area 805, then pressing the OK button 806, and further, by selecting the action pattern of "composed" in the action pattern menu 803, and inputting "Long time no see" in the character string input area 805, then pressing the OK button 806, and then, further selecting the action pattern of "smile" in the action pattern menu 803, and inputting "The sweet you gave me yesterday was very nice" in the character string input area 805, then pressing the OK button 806 then pressing the sending button 808. The animation description script corresponding to the message thus created by this series of inputting is shown in Figure 7.

It should be noted that the procedure of creating a message is not limited to the foregoing example. For example, the character string may be inputted before the action pattern is selected. Further, the animation description script may be created when the sending button 808 is pressed as thus described, and may also be created each time the OK button 806 is pressed.

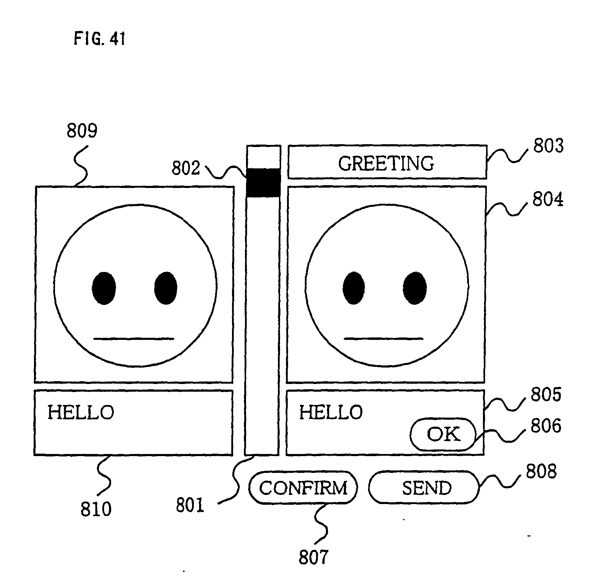

Figure 41 shows a concrete example of a screen creating the response animation description script with reference to the received animation description script by using the script creating means 529. This is the same manner as creating a response e-mail with respect to the received e-mail.

The scroll bar 801, the knob 802, the action pattern menu 803, the character display area 804, the character string input area 805, the OK button 806, the confirming button 807, and the sending button 808 are all the same as those explained in Figure 40.

Further, 809 is a received character display area for displaying animation reproduced according to the received animation description script, and 810 is a character string display area for displaying the conversation line included in the received animation description script. These areas both display a reproduction scene corresponding to the time indicated in the knob 802. Thus, the script creating means 529 displays the animation reproduced according to the received animation description script in the received character display area 809 and the character string display area 810 so as to allow the user to create the response animation description script with reference to the received animation description script.

For example, it is assumed that the animation description script of the first character created by the first animation reproduction device 502 is sent to the animation transfer device 501, and is transferred to the second animation reproduction device 503 by the animation transfer device 501, then is received by the second animation reproduction device 503 through the manner explained in Figure 40.

Here, since the animation description script of the first character is not synchronized with an arbitrary action tag included in the other animation description script, the animation transfer device 501 transfers the animation description script to the second animation reproduction device without modification. Further, the animation transfer device 501 stores the animation description script in the script storing means 511 to save the script for a later operation.

The animation description script of the first character (other party's character) received by the second animation reproduction device 503 is temporarily stored in the second script storing means 523, then the animation of the other party's character is reproduced by the animation reproducing means 528 by referring to the animation description script and the script creating means 529 displays the animation in the received character display area 809 and the character string display area 810 shown in Figure 41.

In order to create a response with respect to this animation description script, the user of the second animation reproduction device 503 operates the knob 802 to specify an arbitrary time, and creates a message with the same operation as that explained in Figure 40. In this manner, a response animation of the one's own character can be created while being synchronized with an arbitrary action tag included in the received animation description script of the other party's character.

For a concrete example of this procedure, the user operates the knob 802 to move it so that the received character display area 809 and the character string display area 810 display the animation corresponding to the unit script 704 in the animation description script of the first character shown in Figure 7, then makes the response of the animation by selecting the action pattern of "greeting" in the action pattern menu 803 and inputting "Hello" in the character string input area 805.

Thereafter, the user further operates the knob 802 to move it so that the received character display area 809 and the character string display area 810 display the animation corresponding to the unit script 705 shown in Figure 7, and selects the action pattern of "angry" in the action pattern menu 803, inputs "We saw each other yesterday, didn't we?" in the character string input area 805 as the response to the "Long time no see", then moves the knob 802 so that the received character display area 809 and the character string display area 810 display the animation corresponding to the unit script 706 shown in Figure 7, and selects the action pattern of "surprised" in the action pattern menu 803, inputs "Did you eat that?" in the character string input area 805 as the response to "The sweet you gave me yesterday was very nice". The animation description script of the second character (one's own character) corresponding to the message created by this series of inputting is shown in Figure 11.

In the animation description script shown in Figure 11, the symbol >> included in the unit scripts 901 through 903 denotes a quote character string, which is quoted from the conversation line of the other party's animation description script shown in Figure 7. By thus describing the quote character string, the first character animation description script and the second character animation description script are synchronized with each other.

In order to ensure the synchronization, as with in the header information of "References" used for general e-mail, the animation description script may include information for specifying the message used as a reference. Further, in order to ensure the synchronization between the action tags 401, a peculiar identifier may be provided for each unit script when creating the animation description script. In this case, the identifier may be described in the animation description script instead of the quote character string.

When the user of the second animation reproduction device 503 presses the sending button 808 after creating the response animation description script through the foregoing operation, the animation description script corresponding to the created message is created and is sent to the animation transfer device 501 by the communicating means 521.

The action tag included in the animation description script of the second character received by the animation transfer device 501 from the animation reproduction device 503 in the foregoing manner is described to synchronize with the action tag included in the animation description script of the first character previously stored in the script storing means 511. Thus, when the animation description script of the second character is transferred to the first animation reproduction device 502, the animation transfer device 501 creates a new temporary animation description script of the first character and sends the temporary animation description script with the animation description script of the second character to the first animation reproduction device 502 so that the action of the first character is coordinated with the action of the second character which is sent as the response, when these characters are reproduced by the first animation reproduction device 502. The following explains a concrete example.

Firstly, explanation of an example of the script conversion table stored in the conversion table storing means 512 will be omitted here, as it is the same as that of the script interpretation table which has been explained with reference to Figure 12.

Note that, the first action tag after modification 1003 is described as an action tag with a bracket []. When the action of the second character is displayed as animation, the action tag with the bracket [] is used for displaying the action of the first character as animation by making it synchronized with the action of the second character

The following will explain the procedure of creating a temporary animation description script of the first character by the temporary script creating means 513 according to the script conversion table stored in the conversion table storing means 512, by using the example of the script conversion table shown in Figure 12.

For example, when the unit script 705 (Figure 7) of the first character animation description script subjected to conversion includes the action tag of "composed", and the unit script 1102 (Figure 11) of the second character animation description script subjected to conversion includes the action tag of "angry", which is synchronized with the action tag of the first character, the first action tag after modification 1003 of "cry" is obtained for the combination of the first action tag 1001 of "composed" and the second action tag 1002 of "angry" by referring to the script conversion table shown in Figure 12. Accordingly, the temporary script creating means 513 adds the first action tag after modification 1003 of "cry" to the unit script 705 of the first character animation description script subjected to conversion, then adds the unit script 705 subjected to conversion to the temporary animation description script of the first character.

By carrying out the foregoing operation with respect to all of the unit scripts included in the animation description script of the first character, it is possible to create a temporary animation description script by adding the action tag to be coordinated with the action of the second character to the action tags included in the animation description script of the first character so that the action of the first character and the action of the second character are coordinated with each other, for example, the first character reacts to the action of the second character.

In the example of the script interpretation table shown in Figure 12, the first action tag after modification 1003 is uniquely stored for each combination of the first action tag 1001 and the second action tag 1002; however, a plurality of the first action tags after modification 1003 may be stored for each combination of the first action tag 1001 and the second action tag 1002. When a plurality of the first action tags after modification 1003 are stored, the temporary script creating means 513 may refer the script conversion table by either selecting one of the first action tag after modification 1003 among the associated plurality of first action tags after modification 1003 according to probability, or by selecting one in a sequential order. These selecting methods have already been explained in First Embodiment.

As described, even when plurality of the associated first action tags after modification 1003 exist, it is possible to select a different first action tag after modification 1003 for repeatedly selecting the same combination of the first action tag 1001 and the second action tag 1002, thereby providing variety of the display to keep the user amused at the animation reproduction.

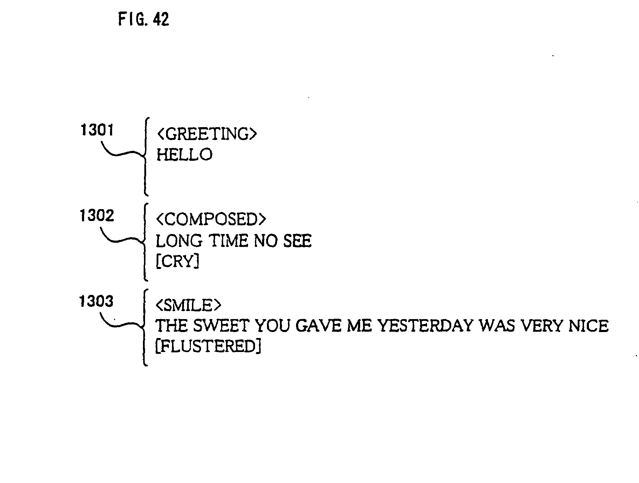

Figure 42 shows the temporary animation description script of the first character created from the animation description script of the first character shown in Figure 7 and the animation description script of the second character shown in figure 11 by the temporary script creating means 513 in the foregoing manner.

The unit script 704 included in the animation description script of the first character includes the action tag of "greeting", and the unit script 1101 included in the animation description script of the second character includes the action tag of "greeting" which is synchronized with the unit script 704 of the first character. Therefore, the temporary script creating means 513 refers to the example of the script conversion table shown in Figure 12 stored in the conversion table storing means 512. Since the script conversion table does not store the combination made up of the first action tag 1001 of "greeting" and the second action tag 1002 of "greeting", the unit script 704 of the animation description script of the first character is added to the temporary animation description script of the first character without modification (the unit script 1301 in Figure 42).

Otherwise, the action tag included in the unit script 704 may be used as the first action tag after modification 1003. Accordingly, the first action tag after modification 1003 of "greeting" is added to the unit script 704 in the animation description of the first character, and then the unit script with the first action tag after modification 1003 of "greeting" is added to the temporary animation description script of the first character. This manner can have the same content of operation as that will be described later.

Similarly, since the unit script 705 included in the animation description script of the first character includes the action tag of "composed", and the unit script 1102 included in the animation description script of the second character includes the action tag of "angry", which is synchronized with the unit script 705 of the first character, the temporary script creating means 513 obtains the first action tag after modification 1003 of "cry" for the combination made up of the first action tag 1001 of "composed" and the second action tag 1002 of "angry" by referring to the script conversion table. Then, the first action tag after modification 1003 of "cry" is added to the unit script 705 of the first character, and the unit script (the unit script 1302 in Figure 42) with the first action tag after modification 1003 of "cry" is added to the temporary animation description script of the first character.

Further, similarly, the temporary script creating means 513 obtains the first action tag after modification 1003 of "flustered" for the combination made up of the first action tag 1001 of "smile" included in the unit script 706 of the first character, and the second action tag 1003 of "surprised" included in the unit script 1103 of the second character which is synchronized with the unit script 706 of the first character by referring to the script conversion table. Then, the first action tag after modification 1003 of "flustered" is added to the unit script 706 of the first character, and the unit script (the unit script 1303 in Figure 42) with the first action tag after modification 1003 of "flustered" is added to the temporary animation description script of the first character.

With the foregoing manner, the animation transfer device 501 sends the temporary animation description script created by the foregoing method when the animation description script of the second character is transferred to the first animation reproduction device 502.

The animation reproduction device 502 respectively stores the received temporary animation description script of the first character (one's own character) in the first script storing means 522, and the received temporary animation description script of the second character (other party's character) in the second script storing means 523. The script interpreting means 525 interprets these animation description scripts and associates the scripts with the action patterns with the foregoing manner, and the animation reproducing means 528 reproduces the scripts as animation.

Note that, the example of reproduction of the example of the temporary animation description script of the first character shown in Figure 42 and the example of the animation description script of the second character shown in Figure 11 by the animation reproducing means 528 according to the example of the action pattern shown in Figure 4 will be the same as the example explained with reference to Figures 13 through 18.

Note that, those figures respectively show a display of the character by interpretation of the script interpreting means 525 with respect to the unit script 1301 of Figure 42 in Figure 13, the unit script 1101 of Figure 11 in Figure 14, the unit script 1302 of Figure 42 in Figure 15, the unit script 1102 of Figure 11 in Figure 16, the unit script 1303 of Figure 42 in Figure 17, the unit script 1103 of Figure 11 in Figure 18.

In those figures, the character on the left side is the first character, and the character on the right side is the second character. In each figure, each action tag included in the unit script is associated with the action pattern by the script interpreting means 525 and is reproduced as an action of the character, and each conversation line in the unit script is written in a balloon as the utterance during the motion. Further, in Figure 16, the first character is reproduced with an action of the action pattern associated with the first action tag after modification 1003 of "cry" included in the unit script 1302 of the temporary animation description script of the first character shown in Figure 42. Similarly, in Figure 18, the first character is reproduced with an action of the action pattern associated with the first action tag after modification 1003 of "flustered" included in the unit script 1303 of the temporary animation description script of the first character shown in Figure 42. With the foregoing manner, the action of the first character is coordinated with the action of the second character, which is send back as the response of the first character, at reproduction by the first animation reproducing device 502.

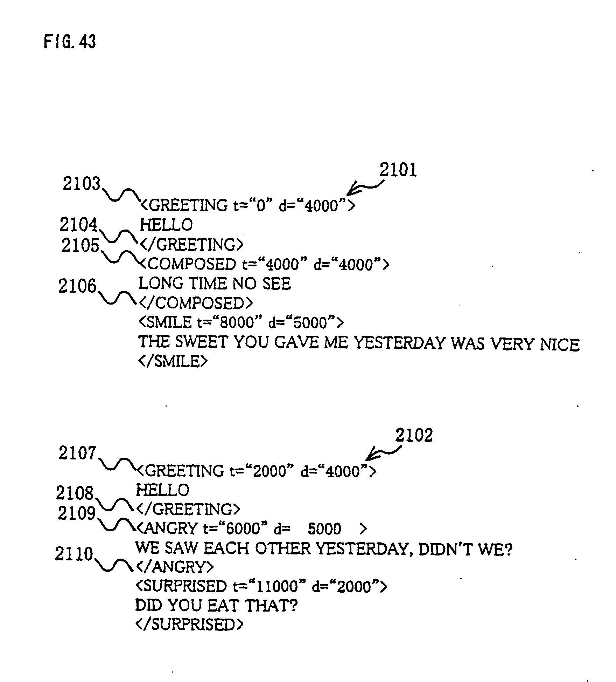

Figure 43 shows an example of another animation description script including information of time for reproducing animation. In the example of the animation description script shown in Figure 11, the symbol >> indicating a quote character string is used for the synchronization with the animation description script of the other party's character shown in Figure 7; however, the synchronization can be ensured by thus including the information of time.

In Figure 43, 2101 is an example of the animation description script of the first character, and 2102 is an example of the animation description script of the second character. The character string 2103 is an action tag as with that shown in Figure 7, and the value after 't=' denotes the start time of the action pattern expressed by this action tag, and the value after 'd=' denotes the duration of the action pattern expressed by this action tag. Here, the unit of time is ms (millisecond). In this example, 't="0"' denotes that the start time of the action pattern expressed by this action tag is 0ms after the reproduction start time of the whole animation, and 'd="4000"' denotes that the duration of the action pattern expressed by this action tag is 4000ms.

Note that, the animation description scripts 2101 and 2102 in the example shown in Figure 43 adopt a description mode generally known as a SGML (Standard Generalized Markup Language) or a XML (Extensible Markup Language). In the first action tag 2103, 'greeting' denotes an element name indicating type of the action tag, and 't="0"' and 'd="4000"' denote attribute.

By thus describing information of animation reproduction time for each action tag, it becomes easier to refer to action tags synchronized with each other among the action tags included in a plurality of animation description scripts. For example, at the time of 6000ms after the reproduction start time of the whole animation, since the animation reproduction of the first character and the second character is carried out according to the action pattern associated with the action tag of '<composed t="4000" d="4000">' in the first character animation description script 2101, and the action tag of '<angry t="6000" d="5000">' in the second character animation description script 2102, these action tags are regarded as being synchronized with each other.

Further, according to the adopted description mode such as the SGML or the XML, the element name is described between </ and > as an end tag associated with the action tag, and a range from the action tag to the end tag makes a unit script. For example, the end tag 2104 is provided to correspond to the action tag 2103. Further, the character string provided between the action tag 2103 and the end tag 2104 denotes the conversation line.

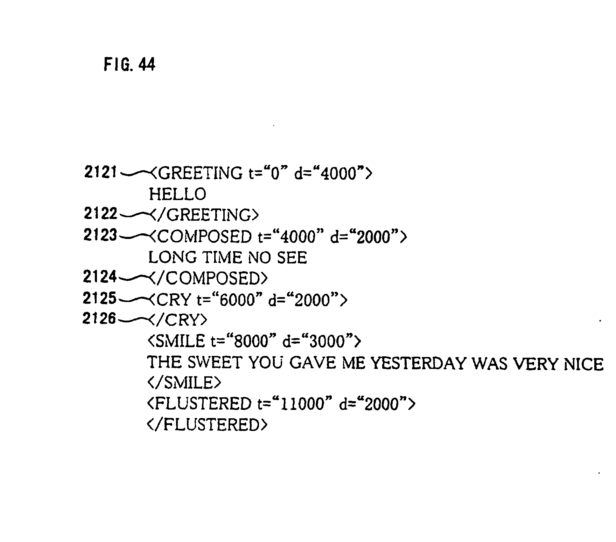

Figure 44 shows an example of the temporary animation description script of the first character created from the animation description script of the first character 2101 and the animation description script of the second character 2102 shown in Figure 43 by the temporary script creating means 513. The creation procedure of the temporary animation description script of the first character is the same as that has been described above, and the following explains conversion procedure of the information of time for animation reproduction included in the action tag.

Firstly, the start time of the action pattern expressed in the first unit script (2103 to 2104 in Figure 43) in the animation description script of the first character 2101 is 0ms after the reproduction start time of the whole animation, and the duration of the action pattern is 4000ms. Accordingly, the unit script which is synchronized with the unit script and included in the animation description script of the second character 2102 will be the unit script 2107 to 2108 of Figure 43, as the reproduction start time is in a range of reproduction time (0ms to 4000ms) of the action patterns included in the unit script 2103 to 2104 of Figure 43. These synchronized unit scripts 2103 and 2107 individually include the action tag of "greeting".

With the same manner as above, with reference to the script conversion table shown in Figure 12 for the combination of the first action tag 1001 and the second action tag 1002, the combination made up of the first action tag 1001 of "greeting" and the second action tag 1002 of "greeting" is not stored. Therefore, the unit script 2103 to 2104 in the animation description script of the first character 2101 is added to the temporary animation description script of the first character without modification (2121 to 2122 in Figure 44).

Next, the start time of the action pattern expressed in the second unit script (2105 to 2106 in Figure 43) in the animation description script of the first character 2101 is 4000ms after the reproduction start time of the whole animation, and the duration of the action pattern is 4000ms. Accordingly, the unit script which is synchronized with those unit scripts and included in the animation description script of the second character 2102 will be the unit script 2109 to 2110 of Figure 43, as the reproduction start time is in a range of reproduction time (4000ms to 8000ms) of the action pattern included in the unit script 2105 to 2106 of Figure 43.

These synchronized unit scripts 2105 and 2109 individually include the action tags of "composed" and "angry". With the same manner as above, with reference to the script conversion table shown in Figure 12 for the combination made up of the first action tag 1001 of "composed" and the second action tag 1002 of "angry", the first action tag after modification 1003 of "cry" is obtained.

However, the reproduction time of the action pattern expressed by the unit script 2105 to 2106 and the reproduction time of the action pattern expressed by the unit script 2109 to 2110 are not completely identical, as the action pattern expressed by the unit script 2105 to 2106 is reproduced at 4000ms to 8000ms, and the action pattern expressed by the unit script 2109 to 2110 is reproduced at 6000ms to 11000ms. Therefore, the unit script 2105 to 2106 of the first character is converted by the following procedure.

Firstly, the duration of the unit script of the first character before conversion (2105 to 2106 in this case) is converted to the value (2000 in this case) obtained by subtracting the start time (4000 in this case) of the unit script 2105 of the first character from the end time (6000 in this case) of the unit script 2108 of the second character so that the end time of the action pattern of the unit script of the first character before conversion becomes the same as the start time of the action pattern of the synchronized unit script (2109 and 2110 in this case) of the second character. Then, the unit script after conversion is added to the temporary animation description script of the first character (2123 to 2124 in Figure 44).

Next, the unit script made up of the action tag of the first action tag after modification 1003 ("cry" in this case) thus obtained and the end tag corresponding to the action tag is added to the temporary animation description script of the first character (2125 to 2126 in Figure 44). The first action tag after modification 1003 has the start time which is the same as that (6000 in this case) of the action pattern of the unit script (2109 to 2110 in this case) of the synchronized second character, and the duration of the value (2000 in this case) obtained by subtracting the duration (2000 in this case) of the unit script thus converted (2123 to 2124 in Figure 44) from the duration (4000 in this case) of the action pattern of the unit script (2105 to 2106 in this case) of the first character before conversion.

This unit script is added so as to convert the action pattern of the first character to be the action pattern corresponding to the first action tag after modification 1003, in the time in which the action pattern of the unit script 2105 to 2106 of the first character before conversion and the action pattern of the unit script 2109 to 2110 of the second character are simultaneously reproduced.

The foregoing operation thus explained is carried out with respect to all unit scripts included in the animation description script 2101 of the first character before conversion. By thus performing the conversion, it is possible to create the temporary animation description script in which the action of the first character is coordinated with that of the second character.

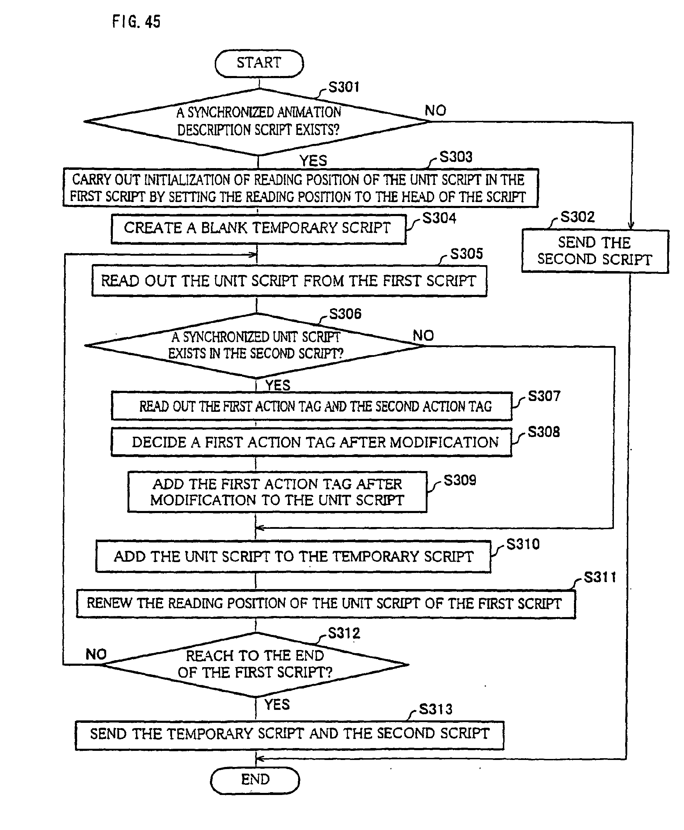

Figure 45 shows a flow chart explaining an operation for creating the temporary animation description script by the temporary script creating means 513 when the animation transfer device 501 transfers the animation description script received from one of the animation reproduction devices 502 and 503 to the other of the animation reproduction devices 502 and 503 in the animation reproduction system having an arrangement shown in Figure 39.

Here, it is assumed that the animation transfer device 501 receives the animation description script from the second animation reproduction device 503 and transfers the script to the first animation reproduction device 502. The same operation can be carried out for transferring the animation description script from the first animation reproduction device 502 to the second animation reproduction device 503 by replacing these first and second devices.

Further, this animation description script is described in the same manner as those shown in Figures 7 and 11.

Firstly, judgment is carried out whether or not the first animation description script (hereinafter referred to as a first script) is received from the first animation reproduction device 502 and is stored in the script storing means 511. The first script includes an action tag synchronized with an arbitrary action tag included in the second animation description script (hereinafter referred to as a second script) received from the second animation reproduction device 503 by the communicating means 514 (Step 101, hereinafter abbreviated to S301). The operation goes to S302 when the synchronized first script does not exist, and goes to S303 when the synchronized first script exists.

When the synchronized first script does not exist in S301, the second script is transferred to the first animation reproduction device 502 without modification (S302). Then, the operation is completed.

Next, when the synchronized animation description script exists in S301, the temporary script creating means 513 carries out initialization of the reading position for starting readout of a unit script included in the first script by setting the reading position to the head of the first script (S303).

Next, the temporary script creating means 513 creates a blank temporary animation description script (hereinafter referred to as a temporary script) (S304). Next, the temporary script creating means 513 reads out a unit script at the reading position from the first script (step S305).

Next, the temporary script creating means 513 judges whether or not the second unit script includes a unit script synchronized with the unit script thus read out in S305 (S306). The operation goes to S307 when the synchronized unit script exists, and goes to S310 when the synchronized unit script does not exist. When the judgment in S306 is carried out with respect to the animation description script shown in Figures 7 and 11, the second unit script shown in Figure 11 is subjected to search for the quote character string denoted by >> corresponding to the character string included in the unit script read out in S305, and the unit script including the corresponding quote character string is regarded as the synchronized unit script.

When the synchronized unit script exists in the second script in S306, the temporary script creating means 513 reads out the action tag included in the unit script in the first script thus read out in S305, which will be the first action tag 1001, and reads out the action tag included in the synchronized unit script in the second script, which will be the second action tag 1002 (S307).

Next, the temporary script creating means 513 refers to the script conversion table stored in the conversion table storing means 512 so as to decide the first action tag after modification 1003 (S308). The method of this operation has been explained above in detail.

Next, the temporary script creating means 513 adds the first action tag after modification 1003 thus decided in S308 to the unit script read out in S305 (S309).

Next, the unit script with the first action tag after modification 1003 thus added in S308 is added to the temporary script (S310).

Next, the temporary script creating means 513 moves the reading position for reading out the unit script from the first script to the next script (S311). In the case where there is no more unit scripts exist in the first script, the temporary script creating means 513 sets a value EOF in the reading position so as to indicate that the reading position reaches to the end of the first script.

Next, the temporary script creating means 513 judges whether or not the value EOF is set in the reading position moved in S311, i.e., the read out of the first script is completed (S312). When the value EOF is set, the operation goes to S313. Otherwise, the operation carries on back from the S305.

When the temporary script creating means 513 judges that the read out of the first script is completed in S312, the temporary script and the second script are sent to the first animation reproduction device 502 (S313). Then, the operation is completed.

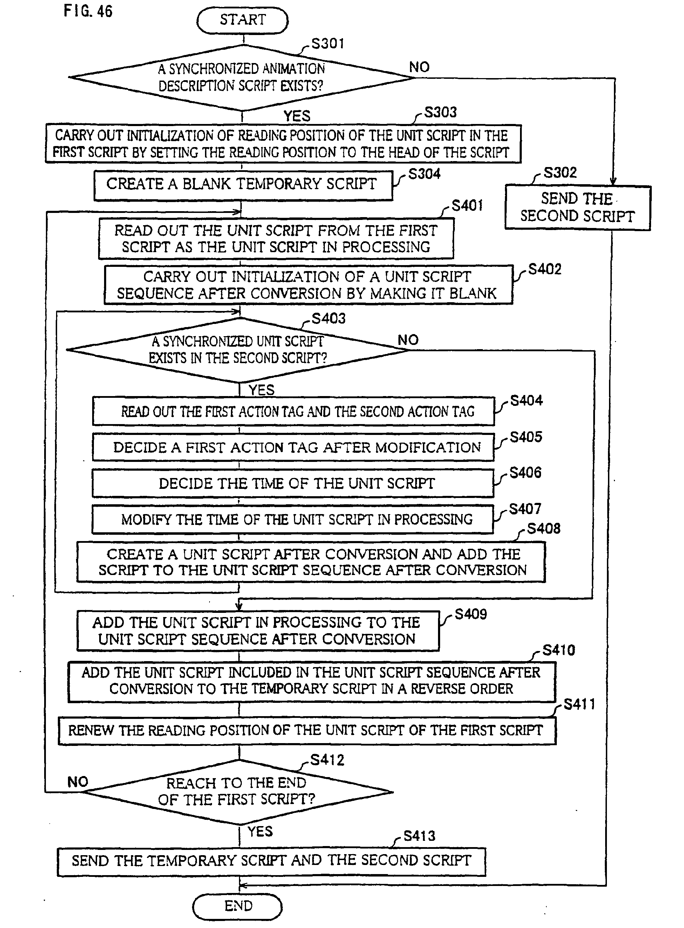

Figure 46 shows another flow chart explaining an operation for creating the temporary animation description script by the temporary script creating means 513 when the animation transfer device 501 transfers the animation description script received from the second animation reproduction device 503 to the first animation reproduction devices 502 as with the operation explained in Figure 45. The operation shown in Figure 46 adopts the animation description script described in the description method shown in Figure 43.

In Figure 46, the operation from S301 to S304 is the same as that explained in Figure 45, and the explanation thereof is omitted.

After the operation of S304, the temporary script creating means 513 reads out the unit script at the reading position from the first script, and stores the unit script as the unit script in processing (S401).

Next, the temporary script creating means 513 carries out initialization of the unit script sequence after conversion for temporarily storing the unit script after conversion by making the unit script sequence after conversion blank (S402).

Next, the temporary script creating means 513 judges whether or not the second unit script includes a unit script synchronized with the unit script in processing (S403). The operation goes to S404 when the synchronized unit script exists, and goes to S409 when the synchronized unit script does not exist. When the judgment in S403 is carried out with respect to the animation description script shown in Figure 43, as described, the second unit script 2102 shown in Figure 43 is subjected to search for the unit script of which reproduction start time is in a range between the reproduction start time to the duration of the action pattern expressed by the unit script in processing, and the corresponding unit script is regarded as the synchronized unit script. Further, in the case where a plurality of synchronized unit scripts exist in the second unit script 2102, the unit script with the latest start time will be regarded as the synchronized unit script considering a later operation.

When the synchronized unit script exists in the second script 2102 in S306, the temporary script creating means 513 reads out the action tag included in the unit script in processing, which will be the first action tag 1001, and reads out the action tag included in the synchronized unit script in the second script 2102, which will be the second action tag 1002 (S404).

Next, the temporary script creating means 513 refers to the script conversion table stored in the conversion table storing means 512 so as to decide the first action tag after modification 1003 (S405). The method of this operation has been explained above in detail.

Next, the temporary script creating means 513 decides a new duration of the unit script in processing, and also the start time and the duration of the unit script after conversion to provide an action coordinated with the synchronized unit script in the second script (S406). The new duration, the start time, and the duration of the unit script after conversion are created by converting the start time and the duration (hereinafter respectively referred to as a first start time and a first duration) described in the unit script in processing and the start time and the duration (hereinafter respectively referred to as a second start time and a second duration) described in the synchronized unit script in the second script 2102. A concrete example of this operation which has been explained above; however, it should be noted that the start time of the unit script after conversion shall be the second start time, and the duration of the unit script after conversion shall be the value obtained by subtracting the new duration of the unit script in processing, which is obtained by subtracting the first start time from the second start time, from the first duration.

Next, the temporary script creating means 513 changes the duration of the unit script in processing to the new duration thus decided in S406 (S407).

Next, the temporary script creating means 513 creates the unit script after conversion made up of the first action tag after modification 1003 with the start time and the duration thus decided in S406, and the end tag corresponding to the first action tag after modification 1003, and adds the unit script after conversion to the unit script sequence after conversion (S408). Thereafter, the temporary script creating means 513 carries on the operation back from S403. The operations S403 through S408 are repeated as long as the unit script synchronized with the unit script in processing exists in the second script 2102. With this method, even when a plurality of the unit script synchronized with the unit script read out in S401 exist in the second script 2102, the operation can be carried out with respect to each of the plurality of the synchronized unit scripts.

When the synchronized unit script does not exist in the second script 2102 in S403, the temporary script creating means 513 adds the unit script in processing to the unit script sequence after conversion. Here, the duration of the added unit script in processing differs from that of the unit script read out in S401 due to the operation in S407. Namely, it should be noted that the duration might have been modified due to the operations S403 through S408 so that the second script 2102 does not include the synchronized unit script.

Next, the temporary script creating means 513 adds all of the unit scripts included in the unit script sequence after conversion to the temporary script in an order reverse to that when they are added to the unit script sequence after conversion (S410). As described, in the case where a plurality of synchronized unit scripts exist in the second unit script 2102, the unit script with the latest start time is regarded as the synchronized unit script; therefore, by carrying out the foregoing operation in an order reverse to that when they are added, in each unit script, unit scripts with earlier start times can be added first to the temporary script.

Next, the temporary script creating means 513 moves the reading position for reading out the unit script from the first script 2101 to the next script (S411). In the case where there is no more unit scripts exist in the first script 2101, the temporary script creating means 513 sets a value EOF in the reading position so as to indicate that the reading position reaches to the end of the first script 2101.

Next, the temporary script creating means 513 judges whether or not the value EOF is set in the reading position moved in S411, i.e., the read out of the first script 2101 is completed (S412). When the value EOF is set, the operation goes to S413. Otherwise, the operation carries on back from the S401.

When the temporary script creating means 513 judges that the read out of the first script 2101 is completed in S312, the temporary script and the second script 2102 are sent to the first animation reproduction device 502 (S413). Then, the operation is completed.

With the foregoing manner, when the second animation reproduction device 503 sends back the animation description script of the second character as the response to the first animation reproduction device 502 with respect to the animation description script of the first character sent from the first animation reproduction device 502 to the second animation reproduction device 503, the animation transfer device 501 creates a temporary animation description script of the first character and sends the temporary script with the response. With this operation, the first animation reproduction device 502 can carry out reproduction with an action of the sent first character coordinated with the action of the second characters as the response without modifying the animation description script of the first character. Thus, natural communication using a series of animation can be realized between the first animation reproduction device 502 and the second animation reproduction device 503.

Further, since the animation transfer device 501, which is separated from the animation reproduction devices 502 and 503, operates to create and transfer the temporary animation description script, advanced animation reproduction can be realized even when the animation reproduction devices 502 and 503 are terminals with low throughput such as a portable information processing terminal or a mobile phone.

The animation transfer device thus explained is realized by a program for causing a computer to execute a function of creating the temporary animation description script based on the animation description script received from the animation reproduction device, and transferring the created script to the animation reproduction device of other party.

Further, the animation reproduction device thus explained is realized by a program for causing a computer to execute a function of creating the animation description script, and transferring the created script to the animation reproduction device.

These programs are stored in a computer-readable storage medium. In the present invention, to carry out the operation in a general computer, the storage medium may be a program medium such as ROM (Read Only Memory) included or connected to a general computer, or a program medium readable by computer by inserting a storage medium in a program reading device, which is provided as an external storage device.

In either case, the stored program may be realized by access of microprocessor, or may be realized in such a manner that the program is read out and is downloaded in a program storage area such as a RAM (Random Access Memory) included in a general computer so as to be carried out. This program for downloading should be previously stored in the main body.

Here, the program medium above is a storage medium arranged to be removable from the main body, and may be the medium fixedly holds the program code, which can be (a) a tape system such as a magnetic tape, a cassette tape or the like, (b) a disk system which includes a magnetic disk such as a floppy disk®, a hard disk or the like and an optical disk such as a CD-ROM, an MO, an MD, a DVD or the like, (c) a card system such as an IC card (inclusive of a memory card), an optical card or the like, and (d) a semiconductor memory such as a mask ROM, an EPROM, an EEPROM, a flash ROM.

Further, since the present invention has a configuration accessible to a communications network including the Internet, the medium may be the one fluidly carries the program code so that the program can be downloaded via the communications network. Note that, in the case of thus downloading a program from the communications network, the program to be downloaded may be either previously stored in the main body or installed from a different storage medium.

Note that, content stored in the storage medium is not particularly limited to a program but may also be data.

Further, the animation transfer device according to the present invention may be arranged such that, 'the animation description script is made up of one or more unit scripts, which indicates a breakpoint of the animation description script when the temporary script creating means associates the script with the action tags by referring to the script conversion table, and the arbitrary one of the action tags included in the second animation description script of the second character and the arbitrary one of the action tags included in the first animation description script of the first character are synchronized with each other by specifying an arbitrary one of the unit scripts included in the animation description script of the first character'.

The animation reproduction device carrying out communication with the animation transfer device according to the present invention may include script creating means for creating a new animation description script synchronized with an arbitrary action tag included in an arbitrary animation description script.

The foregoing arrangement allows a user to create the animation description script synchronized with an arbitrary action tag in the received animation description script by using the script creating means as a response to the animation description script received from the other animation reproduction device via the animation transfer device.

When the animation description script as a response is sent to the other animation reproduction device, the animation transfer device creates the temporary animation description script by using the received animation description script and the response animation description script, and sends the created temporary animation description script to the other animation reproduction device. Therefore, natural communication using a series of animation can be realized between a plurality of animation reproduction devices.

The animation reproduction system according to the present invention may be made up of the animation transfer device and the animation reproduction device carrying out communication with the animation transfer device.

With the foregoing arrangement, when the animation transfer device transfers the first animation description script from the first animation reproduction device to the second animation reproduction device and then transfers the second animation description script which has been created and sent from the second animation reproduction device, and which is synchronized with an arbitrary action tag included in the first animation description script, to the first animation reproduction device, the animation transfer device also sends the temporary animation description script of the first character created by the temporary script creating means to the first animation reproduction device.

Then, in the first animation reproduction device, the temporary animation description script and the second animation description script which have been sent are respectively associated with the action patterns by the script interpreting means, and are reproduced by the animation reproducing means as animation.

On this account, it is possible to reproduce animation of the first character created by the first animation reproduction device with natural movement coordinated with animation of the second character created by the second animation reproduction device with out modifying the first animation description script.

Further, as described, since the animation transfer device creates and transfers the temporary animation description script of the first character, it is possible to establish an animation reproduction system realizing natural communication using a series of animation between the first animation reproduction device and the second animation reproduction device even when the first animation reproduction devices is a terminal with low throughput such as a portable information processing terminal or a mobile phone.

Note that, the configuration of the animation reproduction system of the present invention may also be adopted for the arrangement such that the respective animation reproduction devices carry out sending and receiving of the animation description script from/to each other so as to send and receive animation of the respective characters, and then one of the animation reproduction devices sends a plurality of animation description scripts for reproducing animation having a plurality of characters to the animation transfer device.

More specifically, for example, the configuration may be arranged as follows: the second animation reproduction device receives the first animation description script directly from the first animation reproduction device, and the second animation reproduction device creates the second animation description script synchronized with an arbitrary action tag included in the first animation description script, and the animation transfer device receives the first animation description script and the second animation description script from the second animation reproduction device, and then transfers the temporary animation description script of the first character and the second animation description script to the first animation reproduction device.

Further, since the animation transfer device does not have to previously receive and store the first animation description script used for creating the temporary animation description script before receiving the second animation description script as a response, the animation transfer device can create the temporary animation description script of the first character with respect to the first animation description script of the first character transferred from the other animation transfer device and received by the second animation reproduction device. On this account, the animation reproduction system of the present invention may be made up of a plurality of animation transfer devices, and the opration for transferring the animation description script and/or creating the temporary animation description script can be distributed in the respective transfer devices.

An animation transfer program according to the present invention causes a computer to operate as the respective means included in the animation transfer device.

With this arrangement, it is possible to operate a general computer as the animation transfer device.

An animation reproduction program according to the present invention causes a computer to operate as the respective means included in the animation reproduction device.

With this arrangement, it is possible to operate a general computer as the animation reproduction device.

Note that, a computer-readable storage medium having the animation transfer program causing a computer to operate as the respective means included in the animation transfer device and a computer-readable storage medium having the animation reproduction program causing a computer to operate as the respective means included in the animation reproduction device are certainly also included in the scope of right of the present invention.

Note that, the embodiments and concrete examples of implementation discussed in the foregoing detailed explanation serve solely to illustrate the technical details of the present invention, which should not be narrowly interpreted within the limits of such embodiments and concrete examples, but rather may be applied in many variations within the spirit of the present invention, provided such variations do not exceed the scope of the patent claims set forth below.

### INDUSTRIAL APPLICATION OF THE PRESENT INVENTION

According to an animation reproduction device of the present invention, by creating and adding the animation of the second character to the existing animation of the first character so that the animation of the second character is synchronized with an arbitrary part of the first animation, the action pattern associated with the animation description script of the first character is selected by being converted into a modified action pattern according to the combination made up of the animation description script of the first character and the animation description script of the second character.

On this account, the first character and the second character are coordinated with each other so as to be reproduced with natural movement without modifying the animation description script of the first character.. Thus, a user of the animation reproduction device can enjoy natural communication using animation.

Further, according to an animation transfer device of the present invention, since the animation transfer device shares the operation for selecting the action pattern associated with the animation description script of the first character after converting the action pattern into a modified action pattern, advanced animation reproduction can be realized even when the first animation reproduction devices making up a communication network with the animation transfer device is a terminal with low throughput such as a portable information processing terminal or a mobile phone.

## Claims

1. An animation reproduction device for reproducing animation having a plurality of characters, comprising:
action pattern storing means for storing action information of the characters as action patterns;
script storing means for storing an animation description script described with a combination or sequence of action tags for specifying the action patterns;
interpretation table storing means for storing a script interpretation table having the action tags and the action patterns associated with each other;
script interpreting means for interpreting the animation description script and associating the animation description script with the action patterns by referring to the script interpretation table stored in the interpretation table storing means; and
animation reproducing means for moving the characters according to the action patterns associated by the script interpreting means,
wherein:
arbitrary one of the action tags included in the animation description script of a second character is described to synchronize with arbitrary one of the action tags included in the animation description script of a first character, and the script interpreting means interprets an action tag included in the animation description script of the first character by referring to an action tag which is included in the animation description script of the second character, and which is synchronized with the action tag included in the animation description script of the first character.

2. The animation reproduction device as set forth in claim 1, further comprising:
script creating means for creating the animation description script.

3. The animation reproduction device as set forth in claim 1, further comprising:
communicating means for receiving the animation description script from a communication device; and
script creating means for allowing a user to create the animation description script as a response while allowing the user to confirm an action of the characters based on the animation description script which has been received.

4. The animation reproduction device as set forth in claim 1, further comprising:
communicating means for receiving the action patterns via a network; and
action pattern storing means for storing the action patterns thus received.

5. The animation reproduction device as set forth in claim 1, further comprising:
shape data storing means for storing shape data, which is whole part of the characters or components for making up the characters, and display parameter including at least one of display position, rotation angle or enlargement ratio of the whole part or the components of the characters.

6. The animation reproduction device as set forth in claim 1, wherein:
the animation description script includes a group of unit scripts respectively indicating a range of one interpretation interpreted by the script interpreting means.

7. The animation reproduction device as set forth in claim 6, wherein:
the unit scripts are separated from each other by a blank line.

8. The animation reproduction device as set forth in claim 2, wherein:
the script creating means includes an input section for selecting an action pattern from the action patterns stored in the action pattern storing means, and for specifying duration for moving the characters according to the action pattern thus selected.

9. The animation reproduction device as set forth in claim 2, wherein:
the script creating means includes confirming means for allowing a user to confirm animation reproduced according to the animation description script which has been created.

10. The animation reproduction device as set forth in claim 3, wherein:
the script creating means includes an input section for specifying an arbitrary time of the action of the characters based on the animation description script which has been received.

11. The animation reproduction device as set forth in claim 5, further comprising:
the input section includes an instruction section for instructing the script creating means to create the animation description script based on the action pattern and the duration which have been specified.

12. The animation reproduction device as set forth in claim 5, wherein:
the script creating means includes display means for displaying the action pattern selected by the input section for confirmation of the action pattern.

13. An animation reproduction device for reproducing animation having a plurality of characters, comprising:
action pattern storing means for storing action information of the characters as action patterns;
character condition storing means for storing condition parameters regarding condition of the characters;
script storing means for storing an animation description script described with a combination or sequence of action tags for specifying the action patterns;
interpretation table storing means for storing a script interpretation table for associating combinations of the action tags and the condition parameters with the action patterns and correction values of the condition parameters;
script interpreting means for interpreting the animation description script and associating the animation description script with the action patterns by referring to the script interpretation table stored in the interpretation table storing means;
animation reproducing means for moving the characters according to the action patterns associated by the script interpreting means; and
character condition renewing means for interpreting the animation description script by referring to the script interpretation table stored in the interpretation table storing means so as to renew the condition parameters,
wherein:
arbitrary one of the action tags included in the animation description script of a second character is described to synchronize with arbitrary one of the action tags included in the animation description script of a first character, and the script interpreting means interprets an action tag included in the animation description script of the first character by referring to an action tag included in the animation description script of the second character, and which is synchronized with the action tag included in the animation description script of the first character.

14. An animation reproduction device for reproducing animation having a plurality of characters, comprising:
action pattern storing means for storing action information of the characters as action patterns;
character condition storing means for storing condition parameters regarding condition of the characters;
script storing means for storing an animation description script described with a combination or sequence of action tags for specifying the action patterns;
interpretation table storing means for storing a script interpretation table having combinations of the action tags and the condition parameters, and the action tags associated with the combinations of the action tags and the condition parameters;
script interpreting means for interpreting the animation description script and associating the animation description script with the action patterns by referring to the script interpretation table stored in the interpretation table storing means; and
animation reproducing means for moving the characters according to the action patterns associated by the script interpreting means,
wherein:
arbitrary one of the action tags included in the animation description script of a second character is described to synchronize with arbitrary one of the action tags included in the animation description script of a first character, and the script interpreting means interprets an action tag included in the animation description script of the first character by referring to an action tag included in the animation description script of the second character, and which is synchronized with the action tag included in the animation description script of the first character.

15. The animation reproduction device as set forth in claim 13, wherein:
the character condition renewing means renews the condition parameters by using the condition parameters and the correction values of the condition parameters associated by the script interpreting means.

16. The animation reproduction device as set forth in claim 2, wherein:
the character condition renewing means renews the condition parameter of at least one of the first and second characters based on at least one of the action tags or the condition parameters of the second character which are referred by the script interpreting means for interpreting the animation description script of the first character.

17. The animation reproduction device as set forth in claim 13, wherein:
the arbitrary one of the action tags included in the animation description script of the second character and the arbitrary one of the action tags included in the animation description script of the first character are synchronized with each other by description of information of time for reproducing animation.

18. The animation reproduction device as set forth in claim 14, wherein:
the arbitrary one of the action tags included in the animation description script of the second character and the arbitrary one of the action tags included in the animation description script of the first character are synchronized with each other by description of information of time for reproducing animation.

19. The animation reproduction device as set forth in claim 13, wherein:
the arbitrary one of the action tags included in the animation description script of the second character and the arbitrary one of the action tags included in the animation description script of the first character are synchronized with each other by specifying an arbitrary description included in the animation description script of the first character.

20. The animation reproduction device as set forth in claim 14, wherein:
the arbitrary one of the action tags included in the animation description script of the second character and the arbitrary one of the action tags included in the animation description script of the first character are synchronized with each other by specifying an arbitrary description included in the animation description script of the first character.

21. An animation reproduction device for reproducing animation having a plurality of characters, comprising:
action pattern storing means for storing action information of the characters as action patterns;
script storing means for storing an animation description script described with a combination or sequence of action tags for specifying the action patterns;
interpretation table storing means for storing a script interpretation table for associating combinations of the action tags of a first character and the action tags of a second character with action tags after modification, and associating the action tags after modification with the action patterns;
script interpreting means for interpreting the animation description script and associating the action tags after modification with the action patterns by referring to the script interpretation table stored in the interpretation table storing means when arbitrary one of the action tags included in the animation description script of a second character is described to synchronize with arbitrary one of the action tags included in the animation description script of a first character; and
animation reproducing means for moving the characters according to the animation description script, or the action patterns associated by the script interpreting means.

22. The animation reproduction device as set forth in claim 21, wherein:
in the script interpretation table, the action tags of the first character are associated with first action tags after modification, and the action tags of the second character are associated with second action tags after modification.

23. The animation reproduction device as set forth in claim 21, wherein:
in the script interpretation table, a combination of one of the action tags of the first character and one of the action tags of the second character is associated with a plurality of action tags after modification; and
the script interpreting means selects one of the plurality of action tags after modification according to probability by referring to the script interpretation table.

24. The animation reproduction device as set forth in claim 23, wherein:
in the script interpretation table, the plurality of the action tags after modification respectively have selection probability denoting likelihood in selection.

25. The animation reproduction device as set forth in claim 21, wherein:
in the script interpretation table, a combination of one of the action tags of the first character and one of the action tags of the second character is associated with a plurality of action tags after modification; and
the script interpreting means selects one of the plurality of action tags after modification in a sequential order by referring to the script interpretation table.

26. An animation reproduction system, comprising:
a first animation reproduction device; and
a second animation reproduction device,
the first animation reproduction device includes:
a first arrangement having action pattern storing means for storing action information of characters as action patterns, script storing means for storing an animation description script described with a combination or sequence of action tags for specifying the action patterns, interpretation table storing means for storing a script interpretation table having the action tags and the action patterns associated with each other, script interpreting means for interpreting the animation description script and associating the animation description script with the action patterns by referring to the script interpretation table stored in the interpretation table storing means; and animation reproducing means for moving the characters according to the action patterns associated by the script interpreting means;
first script creating means for creating the animation description script; and
communicating means,
the second animation reproduction device includes:
a second arrangement having a same configuration as that of the first arrangement;
second script creating means for creating the animation description script; and
communicating means,
wherein:
when the animation description script of a first character created by the first script creating means is sent from the first animation reproduction device to the second animation reproduction device via the communicating means, the second script creating means creates the animation description script of a second character so that arbitrary one of the action tags included in the animation description script of the second character is synchronized with arbitrary one of the action tags included in the animation description script of the first character; and
when the animation description script of the second character is sent back from the second animation reproduction device to the first animation reproduction device via the communicating means, the script interpreting means of the first animation reproduction device interprets an action tag included in the animation description script of the first character by referring to the action tag which is included in the animation description script of the second character, and which is synchronized with an action tag included in the animation description script of the first character.

27. The animation reproduction system as set forth in claim 26, wherein:
the first and second animation reproduction devices respectively include script storing means for storing the animation description script which has been sent from one to another as a sent script.

28. The animation reproduction system as set forth in claim 26, wherein:
the first and second animation reproduction devices respectively include received script storing means for storing the animation description script which has been received as a received script.

29. An animation transfer device, comprising:
communicating means for sending and receiving an animation description script with respect to a plurality of animation reproduction devices respectively having a function of creating the animation description script described with a combination or sequence of action tags for specifying action patterns, which are action information of characters, and reproducing animation of the characters according to the animation description script, then sending and receiving the animation description script;
conversion table storing means for storing a script conversion table for associating combinations of the action tags of a first character and the action tags of a second character with action tags after conversion; and
temporary script creating means for creating a temporary animation description script of the first character from a first animation description script by referring to the script conversion table stored in the conversion table storing means, when the first animation description script of the first character created by a first animation reproduction device and a second animation description script of the second character created by a second animation reproduction device as a response to the first animation description script are received by the communicating means, and arbitrary one of the action tags included in the second animation description script of the second character is synchronized with arbitrary one of the action tags included in the first animation description script of the first character,
wherein:
the temporary animation description script is sent to the first animation reproduction device with the second animation description script.

30. The animation reproduction device as set forth in claim 29, wherein:
the arbitrary one of the action tags included in the second animation description script of the second character and the arbitrary one of the action tags included in the first animation description script of the first character are synchronized with each other by description of information of time for reproducing animation.

31. The animation reproduction device as set forth in claim 29, wherein:
the arbitrary one of the action tags included in the second animation description script of the second character and the arbitrary one of the action tags included in the first animation description script of the first character are synchronized with each other by specifying an arbitrary description included in the animation description script of the first character.

32. An animation reproduction device, comprising:
communicating means for carrying out communication with the animation transfer device as set forth in claim 29;
action pattern storing means for storing action information of characters as action patterns;
interpretation table storing means for storing a script interpretation table for associating action tags for specifying the action patterns with the action patterns;
script interpreting means for interpreting an animation description script which is described with a combination or sequence of the action tags for specifying the action patterns, and associating the animation description script with the action patterns by referring to the script interpretation table stored in the interpretation table storing means; and
animation reproducing means for moving the characters according to the action patterns associated by the script interpreting means.

33. The animation reproduction device as set forth in claim 32, further comprising:
script creating means for creating a new animation description script synchronized with an arbitrary action tag included in an arbitrary animation description script.

34. An animation reproduction system comprising:
the animation transfer device as set forth in claim 29 and the animation reproduction device as set forth in claim 32.

35. An animation reproduction method for reproducing animation having a plurality of characters, comprising:
a script interpreting step for associating action patterns with an animation description script described with a combination or sequence of action tags for specifying the action patterns which are action information of the characters; and
an animation reproducing step for moving the characters according to the action patterns associated with the animation description script in the script interpreting step,
wherein:
arbitrary one of the action tags included in the animation description script of a second character is described to synchronize with arbitrary one of the action tags included in the animation description script of a first character, and the script interpreting step is carried out by interpreting the action tags included in the animation description script of the first character by referring to the action tags which are included in the animation description script of the second character, and which are synchronized with the action tags included in the animation description script of the first character.

36. The animation reproduction method as set forth in claim 35, wherein:
the script interpreting step includes a step for moving a reading position of the animation description script between a plurality of animation description scripts so as to sequentially read out the plurality of animation description scripts prepared for each of the characters.

37. The animation reproduction method as set forth in claim 35, further comprising:
a step for modifying the action patterns associated with the action tags based on condition parameters regarding condition of at least one of the first and second characters, the action patterns being associated with the action tags by interpretation of the action tags included in the animation description script of the first character.

38. An animation reproduction program causing a computer to operate as the respective means included in the animation reproduction device as set forth in claim 1.

39. An animation reproduction program causing a computer to operate as the respective means included in the animation reproduction device as set forth in claim 13.

40. An animation reproduction program causing a computer to operate as the respective means included in the animation reproduction device as set forth in claim 14.

41. An animation reproduction program causing a computer to operate as the respective means included in the animation reproduction device as set forth in claim 21.

42. An animation reproduction program causing a computer to execute the respective steps included in the animation reproduction method as set forth in claim 35.

43. An animation transfer program causing a computer to operate as the respective means included in the animation transfer device as set forth in claim 29.

44. An animation reproduction program causing a computer to operate as the respective means included in the animation reproduction device as set forth in claim 32.

45. A computer-readable storage medium containing thereon an animation reproduction program causing a computer to operate as the respective means included in the animation reproduction device as set forth in claim 1.

46. A computer-readable storage medium containing thereon an animation reproduction program causing a computer to operate as the respective means included in the animation reproduction device as set forth in claim 13.

47. A computer-readable storage medium containing thereon an animation reproduction program causing a computer to operate as the respective means included in the animation reproduction device as set forth in claim 14.

48. A computer-readable storage medium containing thereon an animation reproduction program causing a computer to operate as the respective means included in the animation reproduction device as set forth in claim 21.

49. A computer-readable storage medium containing thereon an animation transfer program causing a computer to operate as the respective means included in the animation transfer device as set forth in claim 29.

50. A computer-readable storage medium containing thereon an animation reproduction program causing a computer to operate as the respective means included in the animation reproduction device as set forth in claim 32.

51. A computer-readable storage medium containing thereon an animation reproduction program causing a computer to execute the respective steps included in the animation reproduction method as set forth in claim 35.
